(19) **Europäisches Patentamt / European Patent Office / Office européen des brevets**

(11) **EP 2 130 797 B1**

(12) **EUROPEAN PATENT SPECIFICATION**

(45) Date of publication and mention of the grant of the patent:
**11.01.2017  Bulletin 2017/02**

(21) Application number: **08722000.0**

(22) Date of filing: **13.03.2008**

(51) Int Cl.:
**C01B 33/12** (2006.01)    **B32B 5/18** (2006.01)
**B32B 9/00** (2006.01)     **C08K 5/5415** (2006.01)
**C08L 71/02** (2006.01)    **C08L 83/04** (2006.01)
**C01B 33/149** (2006.01)   **C01B 33/187** (2006.01)
**C01B 33/193** (2006.01)

(86) International application number:
**PCT/JP2008/054596**

(87) International publication number:
**WO 2008/111636 (18.09.2008 Gazette 2008/38)**

(54) **SILICA POROUS BODY, LAMINATE AND COMPOSITION FOR OPTICAL USE, AND METHOD FOR PRODUCING SILICA POROUS BODY**

PORÖSER SILICIUMDIOXIDKÖRPER, LAMINAT UND ZUSAMMENSETZUNG ZUR OPTISCHEN VERWENDUNG UND VERFAHREN ZUR HERSTELLUNG EINES PORÖSEN SILICIUMDIOXIDKÖRPERS

CORPS POREUX EN SILICE, STRATIFIÉ ET COMPOSITION POUR UTILISATION OPTIQUE, ET PROCÉDÉ DE FABRICATION D'UN CORPS POREUX EN SILICE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **13.03.2007   JP 2007062888**
**28.08.2007   JP 2007221059**

(43) Date of publication of application:
**09.12.2009  Bulletin 2009/50**

(73) Proprietor: **Mitsubishi Chemical Corporation**
**Chiyoda-ku**
**Tokyo 100-8251 (JP)**

(72) Inventors:
• **FUNAYAMA, Katsuya**
**Yokohama-shi**
**Kanagawa 227-8502 (JP)**
• **OOIZUMI, Junichi**
**Yokohama-shi**
**Kanagawa 227-8502 (JP)**
• **YAMAKAWA, Tomoko**
**Yokohama-shi**
**Kanagawa 227-8502 (JP)**
• **TAKEUCHI, Hisao**
**Yokohama-shi**
**Kanagawa 227-8502 (JP)**

(74) Representative: **Hoffmann Eitle**
**Patent- und Rechtsanwälte PartmbB**
**Arabellastraße 30**
**81925 München (DE)**

(56) References cited:
WO-A1-99/03926        JP-A- 2001 206 710
JP-A- 2003 142 476     JP-A- 2005 146 282
JP-A- 2006 342 048

• NAKAYAMA T ET AL: "Application of Low Refractive Materials for Optical Windows of Displays", IDW, OELP-6, LONDON UK, 1 January 2002 (2002-01-01), pages 1163-1166, XP007015936,
• DATABASE WPI Week 200512 Thomson Scientific, London, GB; AN 2005-105252 XP002668416, & JP 2005 015309 A (MITSUBISHI CHEM CORP) 20 January 2005 (2005-01-20)

**Description**

[Technical Field]

The present invention relates to porous silica, an optical-purpose layered product using the same, a composition used for production of the porous silica and the production method of the porous silica.

[Background]

There are various reports on the technology that relates to a film made of porous silica serving as a low refractive index material.

As a method of producing a porous silica film, Patent Reference 1 discloses that supercritical drying performed on a silica film with liquefied carbonate gas causes the silica film to have a low refractive index (silica aerogel). This method can result in an extremely low refractive index.

Patent references 2-6 disclose the method to obtain porous silica with homogeneous and regular pores by forming silica/organic compound-hybrids through a sol-gel reaction of alkoxysilicanes under the presence of a particular organic compound, which is followed by removal of the organic compound.

[Patent Reference 1] Japanese Patent Application Laid-Open (KOKAI) No. 2001-202827
[Patent Reference 2] Japanese Patent Application Laid-Open (KOKAI) No. 2001-226171
[Patent Reference 3] Japanese Patent Application Laid-Open (KOKAI) No. 2003-64307
[Patent Reference 4] Japanese Patent Application Laid-Open (KOKAI) No. 2003-142476
[Patent Reference 5] Japanese Patent Application Laid-Open (KOKAI) No. 2004-143029
[Patent Reference 6] Japanese Patent Application Laid-Open (KOHYO) No. 2005-503664

[Disclosure of Invention]

[Problems To be Solved by Invention]

However, the technique disclosed in Patent Reference 1 problematically results in a film having an extremely low mechanical strength and a poor water resistance.

The compositions that are to be used for forming the porous silica obtained in the techniques of Patent References 2-6 have short pot lives and therefore have difficulties in stably obtaining porous silica. As disclosed in Patent References 2-6, most of these conventional techniques are developed to produce materials with low dielectric constants, which have suffered from lack of mechanical strength required for Chemical-Mechanical Polishing (CMP) in formation of copper dual damascene wiring structure in a semiconductor process. Therefore, these materials lack stability when exposed to water, which is peculiar to silica materials. Accordingly, such materials with low refractive indexes produced through conventional techniques have difficulties in maintaining low refractive index when applied to an optical usage and has risen an important problem.

For example, Patent Reference 4 reports that X-ray scattering measurement on obtained porous silica result in the presence of at least one or more scattering peak at scattering angle ($2\theta$) of 0.5-3° and that therefore porous silica having a high mechanical intensity can be obtained. However, since such a film has pores with a regular structure, it is estimated that large distortion of the film and remaining non-reacted silanol groups cause the film to be extremely weak when exposed to water.

Because of low water content as compared to alkoxysilanes, the compositions to be formed into porous silica described in Patent References 2 and 6 have difficulty in controlling sol-gel reactions, have short pot lives, and are formed into porous silica having an extremely hydrophobic surfaces. Therefore, the films are estimated to have low water resistances and rough surfaces.

Meanwhile, the compositions to be formed into porous silica described in Patent References 3 and 5 use organic compounds having low molecular weights so that it is difficult to maintain high porosity of porous silica to be obtained. Consequently, it is estimated that the methods of these references cannot stably produces porous silica having a low refractive index.

With the foregoing problems in view, the objects of the present invention are to provide porous silica having a low refractive index and being stable when exposed to water, an optical-purpose layered product used the porous silica, and a method of production of the porous silica, and to provide a composition that is to be used in the production of porous silica having a low refractive index and being stable when exposed to water which composition has a long pot life and is stable.

[Means to Solve the Problems]

As the result of intensive study to solve the above problems, the present inventors have found that the porous silica meeting the below Conditions (1) and (2) has a low refractive index efficient to optical usage and is superior in water resistance so that the refractive index can remain low when exposed to water, and have completed the present invention.

According to an aspect of the present invention, there is provided porous silica that meets the following Conditions (1) and (2).

Condition (1) : the refractive index is 1. 3 or lower; and
Condition (2): the difference of the refractive index at a wavelength 550 nm between before the immersion into water and after the immersion into water for 24 hours is 0.15 or lower.

In addition, the static contact angle with water after a heating process at 350 °C for 1 hour is 25°-90°.

As a preferable feature, the XRD pattern may not have a diffraction peak the intensity of which is twice a standard deviation or higher in a region of the diffraction angle (2θ)=0.5° through 10°.

As an additional preferable feature, the arithmetic surface roughness Ra may be 20 nm or less, and may be a low-reflective layer.

As a further preferable feature, the porous silica may be a low-reflective layer for a solar cell.

According to another aspect of the present invention, there is provided a film formed of the above porous silica.

According to an additional aspect of the present invention, there is provided an optical-purpose layered product, including: a base material; the porous silica of the present invention formed over the base material.

As a preferable feature, the porous silica may have a film thickness of 100 nm to 10 μm.

As another preferable feature, the optical-purpose layered product of the present invention may have the porous silica may be formed over the base material which has a center line average roughness of 0.1 μm to 15 μm and of a surface roughness having a maximum height Rmax of 0.1 μm to 100 μm.

As an additional preferable feature, the optical-purpose layered product of the present invention may further include an electrode formed over the other surface of the base material than the surface with the porous silica.

As a further preferable feature, the optical-purpose layered product of the present invention may serve as a solar cell which comprises at least one pair of electrodes, which are interposed by a semiconductor layer and which has a light-receiving surface being coated with the porous silica.

As a still further preferable feature, the solar cell may have the entire light transmittance of C light from the porous silica to the semiconductor layer being 80 % or higher.

According to a still further aspect of the present invention, there is provided a composition including: at least one kind selected from a tetraalkoxysilane group consisting of tetraalkoxysilanes, and hydrolysates and partial condensates of the tetraalkoxysilanes; and at least one kind selected from an other alkoxysilane group consisting of alkoxysilanes other than the tetraalkoxysilanes, and hydrolysates and partial condensates of the other alkoxysilanes; and/or a partial condensate of at least one kind selected from the tetraalkoxysilane group and at least one kind selected from the other alkoxysilanes group, the composition further including water, an organic solvent, a catalyst, and a non-ionic polymer having an ethylene oxide moiety, and the composition meeting below Conditions (3) through (6).

Condition (3): the ratio of silicon atoms derived from tetraalkoxysilanes to the silicon atoms derived from the entire alkoxysilanes is 0.3 (mol/mol) to 0.7 (mol/mol) ;
Condition (4): the ratio of water to the silicon atoms derived from the entire alkoxysilanes is 10 (mol/mol) or higher;
Condition (5): the weight-average molecular weight of the non-ionic polymer having the ethylene oxide moiety is 4,300 or more, and
Condition (6): the organic solvent has boiling points of 55 to 140 °C at a ratio of 80 wt% or higher.

As a preferable feature, the ratio of the non-ionic polymer having the ethylene oxide moiety to the silicon atoms derived from the entire alkoxysilanes may be 0.001 (mol/mol) to 0.05(mol/mol).

As another preferable feature, the content of the ethylene oxide moiety in the non-ionic polymer may be 20 wt% or higher.

As an additional preferable feature, the non-ionic polymer having the ethylene oxide moiety may be a (polyethylene oxide)-(polypropylene oxide)-(polyethylene oxide) triblockpolymer and/or polyethylene glycol.

As a further preferable feature, the tetraalkoxysilanes may be tetraethoxysilane; the other alkoxysilanes than the tetraalkoxysilanes may be a monoalkyl alkoxysilane or dialkyl alkoxysilane which has an aromatic hydrocarbon group or an aliphatic hydrocarbon group.

As a further preferable feature, the organic solvent may contain at least one kind selected from a group consisting of ethanol, 1-propanol, t-butanol, 2-propanol, 1-butanol, 1-pentanol and ethyl acetate.

As a further preferable feature, the catalyst may be an acid.

According to a still further aspect of the present invention, there is provided a method for producing the porous silica of the present invention including: forming the composition of the present invention into a film deposited over a base material under an environment having a relative humidity of 20 % to 85%; and heating the composition deposited.

[Effects of the Invention]

The porous silica of the present invention can provide porous silica having a low refractive index and being stable when exposed to water.

The optical-purpose layered product of the present invention can provide an optical-purpose layered product having a low refractive index and being stable when exposed to water.

The composition of the present invention can provide a composition which has a long pot life and is stable and which is to serve to produce porous silica having a low refractive index and being stable when exposed to water.

The method of producing porous silica of the present invention produces the porous silica of the present invention.

[Brief Description of Drawing]

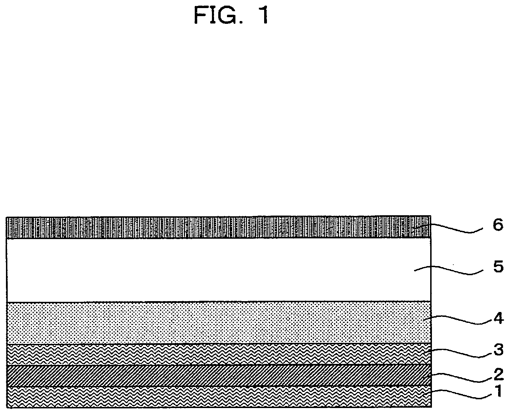

[Fig. 1] A schematic sectional view showing an example of an application (solar cell) of the optical-purpose layered product of the present invention.

[Description of Reference Numbers]

1, 3    electrode
2       semiconductor layer
4       intermediate layer
5       transparent substrate
6       porous silica

[Best Mode To Carry Out Invention]

Hereinafter, the present invention will now be detailed with reference to embodiments. However, the present invention should by no means be limited to the description below and can be carried out with various changes and modifications without departing from the gist thereof.

[1. Porous Silica]

Porous silica of the present invention satisfies the following (1) and (2):

(1) The refractive index thereof is 1.3 or lower; and
(2) The difference of the refractive indexes at a wavelength 550 nm between before the immersion into water and after the immersion for 24 hours is 0.15 or less.

[1-1. Condition (1): Refractive Index]

The porous silica of the present invention has a refractive index of 1.3 or lower (Condition (1)). In the above range, the refractive index is preferably 1.28 or lower, more preferably 1.27 or lower, particularly preferably 1.25 or lower, still further preferably 1.23 or lower. An excessively high refractive index may increase distortion in the porous silica of the present invention to be vulnerable to external force. In the meantime, the lower limit of the refractive index is not particularly limited, but is normally 1.05 or higher, preferably 1.08 or higher. An excessively low refractive index may greatly lower the mechanical strength of the porous silica of the present invention.

A refractive index represents a value at a wavelength between 400 nm through 700 nm obtained through an optical measurement such as a spectroscopic ellipsometer method, a reflection coefficient measurement, a reflection spectroscopic measurement, or measurement with the use of a prism coupler, among which measurement with a spectroscopic ellipsometer is preferable. In measurement with a spectroscopic ellipsometer, a refractive index can be estimated by fitting a measured value into the Cauthy Model.

When porous silica is fitted with a base material having a large center line average roughness, a refractive index can be estimated by a reflection coefficient spectroscopic measurement in which the measurement area is preferably set to be 10 μm or less.

[1-2. Condition (2): Water Resistance]

The porous silica of the present invention has a difference of the refractive index at a wavelength 550 nm between before the immersion into water and after the immersion for 24 hours being 0.15 or less (Condition (2)). In the above range, the difference of the refractive indexes is preferably 0.1 or less, more preferably 0.05 or less, particularly preferably 0.03 or less. That makes the porous silica of the present invention possible to have a superior water resistance and stable refractive-index characteristics even in optical applications. A difference of the refractive indexes larger than the above upper limit means a high possibility that water is captured in the inner porous structure of the porous silica and concurrently a condensation reaction of a silanol group is proceeding in the porous silica. In this case, there is a possibility that the porous silica has been in an unstable state already in the preprocessing stage.

The lower limit of the difference of the refractive indexes is preferably 0.001 or higher, more preferably 0.002 or higher, further preferably 0.004 or higher. A difference of the refractive indexes smaller than the above lower limit causes the porous silica of the present invention to be hydrophobic in terms of affinity for water. At this time, there is a possibility that water is captured inside the porous silica due to a capillary phenomenon of the porous structure. Such captured water is in a state of being barely able to drain away so that the refractive index characteristic of the porous silica may not be maintained. This is important to some outdoor usage.

A difference of the refractive indexes is measured in the following manner. Specifically, the refractive index $n1$ of the porous silica of the present invention is measured at a wavelength of 550 nm in advance, then the same porous silica is immersed into water under conditions of normal temperature and normal humidity (temperature 18 °C to 28 °C, humidity 20 % to 80 %RH), is taken out after 24 hours, and is dried. Hereinafter, this processing is appropriately called "water immersion processing". Drying is not carried out by heating to 100 °C or above, but is carried out by air drying. After that, the refractive index $n2$ of the porous silica is measured again at a wavelength of 550 nm. The absolute value of the difference $\Delta n = |\, n2\text{-}n\, |$ of a refractive index is the above difference of the refractive indexes.

Besides the above water immersion processing, evaluation of water resistance can be based on a "damp heat processing" explained below. Specifically, the refractive index $n1$ of the porous silica of the present invention is measured at a wavelength of 550 nm in advance, then the same porous silica is placed under conditions of temperature 85 °C and humidity 85 %RH and is taken out after 500 hours. After that, the refractive index $n3$ of the porous silica is measured again at a wavelength of 550 nm. The absolute value of the difference $\Delta n' = |\, n3\text{-}n\, |$ of a refractive index corresponds to the above difference of the refractive indexes. The difference of refractive indexes is preferably 0.001 or higher, more preferably, 0.003 or higher, further preferably 0.005 or higher, particularly preferably 0.008 or higher. The difference is preferably 0.15 or lower, more preferably 0.12 or lower, further preferably 0.1 or lower, particularly preferably 0.08 or lower.

[1-3. others]

The porous silica of the present invention is not otherwise limited as long as the porous silica meets above Conditions (1) and (2). However, the porous silica preferably satisfies at least one of the structures and physical properties below, more preferably all of the below.

[1-3-1. Porous Structure]

The porous silica of the present invention is porous having a porous structure whose main component is silica with a great number of pores. The pores are normally in the shape of communicating pores formed by coupling tunnel-shape pores and independent pores, but the detailed structure of the pores is not particularly limited. However, the pores are preferably continuous pores, which can be confirmed with an electronic microscope.

Containing silica as the main component means that the content of silicon in silicon oxide composition to the entire positive element including silicon is normally 50 mol% or higher, preferably 70 mol% or higher, more preferably 80 mol% or higher, particularly preferably 90 mol% or higher. A silicon content lower than the above lower limit greatly increase the roughness of the surface of the porous silica, so that the mechanical strength thereof may be inclined. A higher silicon content makes it possible to form porous silica having smoother surface. The upper limit of the silicon content is ideally 100 mol%.

[1-3-2. Regularity]

Preferably, the porous silica of the present invention does not have a diffraction peak the diffraction peak intensive (area) of which is twice (i.e., 2σ) the standard deviation or more in the region of the diffraction angle (2θ)=0.5° through 10° in the XRD pattern (X-Ray Diffraction pattern). Here, the diffraction peak is one having a periodic structure size calculated from the following definition of 10 angstroms or more. The symbol σ represents a standard deviation, which specifically obeys the definition.

[Description of Diffraction Peak]

The diffraction peak is one having a periodic structure size calculated from the following definition of 10 angstroms or more. Accordingly, a diffraction peak the periodic structure size of which is less than 10 angstroms is not included in the diffraction peak of the present invention.

[Calculation of Periodic Structure size]

A periodic structure size D can be calculated on the basis of Scherrer formula shown as the following Formula (i). In Formula (i), the Scherrer constant K is 0. 9 and the wavelength of X-ray used in the measurement is represented by symbol A. Bragg angle θ and a measured width βo at half weight are calculated from profile fitting. The width β at half weight from samples is corrected through the calculation with the use of the following Formula (ii). A regression curve of the measured width at half weight calculated from the diffraction peak of standard Si is created and the width at half weight corresponding to the relevant angle is read and is regarded as the width βi at half weight derived from an apparatus. The unit of D is angstroms and the unit of β, βo, and βi is radians.

[Expression 1]

Scherrer formula

$$D = \frac{K \cdot \lambda}{\beta \cdot \cos\theta} \qquad \text{Formula (i)}$$

[Expression 2] Formula of correction of the width β at half weight

$$\beta = \sqrt{\beta_o^2 - \beta_i^2} \qquad \text{Formula (ii)}$$

[Description of Standard Deviation]

A standard deviation σ is defined as below.

[Expression 3]

$$\sigma = \sqrt{\sigma_{P+B}^2 - \sigma_B^2}$$

$$\sigma_{P+B} = \sqrt{P+B} \qquad \text{P: Diffraction peak intensity (area)}$$

$$\sigma_B = \sqrt{B} \qquad \text{B: Background intensity (area)}$$

Presence of a diffraction peak in the region of the diffraction angle (2θ)=0.5° through 10° in an XRD pattern ensures the mechanical strength of porous silica for polishing. However, there is a high possibility that the porous silica has large distortion inside thereof and has remaining non-reacted silanol groups so that the porous silica may be poor in water resistance. Accordingly, in order to secure the sufficient water resistance of the porous silica, it is preferable that the distortion (internal stress) inside the porous silica is mitigated by the porous structure. This is realized by controlling the microstructure of the porous silica. In other words, the porous structure of the porous silica is preferably irregular and continuous.

From the above viewpoints, the porous silica of the present invention does not have a diffraction peak the diffraction peak of which intensive is twice the standard deviation or more in the region of the diffraction angle (2θ)=0.5° through 10° of the XRD pattern. Above all, the porous silica does not preferably have a diffraction peak having an intensity three times the standard deviation. Thereby, the porous silica of the present invention has no regularity in the porous structure in the above size region, so that the distortion (internal stress) inside the porous silica can be mitigated and further the water resistance thereof can be enhanced.

The presence of a diffraction peak at a region in which the diffraction angle ($2\theta$) is smaller than 0.5° in the XRD spectrum means that there is a possibility that the homogeneous of the porous silica declines, resulting in low water resistance and low surface properties. On the contrary, the presence of a diffraction peak at a region in which the diffraction angle ($2\theta$) is larger than 10° in the XRD spectrum means that there is a possibility that the pore size of the porous silica decreases to make it difficult to decrease the refractive index. Accordingly, it is preferable that porous silica of the present invention does not have a diffraction peak (particularly, a diffraction peak having a diffraction peak intensity of $2\sigma$ or higher) at a region outside a region of a diffraction angle ($2\theta$) = 0.5° through 10°.

[1-3-3. Other Water Resistances]

In use of the porous silica of the present invention which is formed into a film shape for optical purposes, controlling of an optical film thickness (a product of the refractive index and the film thickness) is an important issue and therefore variation in film thickness during the water immersion processing explained in [1-2. Condition (2)] is preferably small. Specifically, the variation rate of the film thickness between before and after the water immersion processing is preferably 50 % or less, more preferably 30 % or less, further preferably 20 % or less, particularly preferably 10 % or less. An excessively large variation rate may lower the capabilities in application to optical purposes.

A film thickness is sufficiently measured with P-15 Surface Profiler product of KLA-Tencor Corporation under the Conditions of stylus force (contact pressure) 0.2 mg, scan speed 10 $\mu$m/sec. Besides the above, a film thickness can be evaluated with a spectroscopic ellipsometer, a reflection spectroscopy, or a prism coupler.

Further, the porous silica of the present invention after being heated at 350 °C for 1 hour has a static contact angle with water which is 25° or more, preferable 30° or more, particularly preferably 33° or more and is 90° or less, preferably 87° or less, preferably 85° or less, particularly preferably 82° or less. An excessively small static contact angle causes the porous silica to have an excessively high hydrophilicity so that water may be easily adsorbed to the surface of the porous silica and thereby the surface properties may be impaired. In the meantime, an excessively large static contact angle causes the surface of the porous silica to be hydrophobic so that water immersed inside the pores would not drain away and therefore capturing water inside for a long time has possibility of damaging porous silica. When the surface of the porous silica exhibits high hydrophobicity, hydrophobic soil adhered to the surface is hardly removable so that the porous silica may not come to be suitable for outdoor usage. Therefore it is preferable that the porous silica has an improved water resistance by maintaining homogeneity and by possessing a porous structure and surface properties that let water easily enter and drain away.

The static contact angle can be measured in the following manner. Specifically, the porous silica of the present invention is heated under the ambient atmosphere at 350 °C for 1 hour. After cooling performed at normal temperature and normal humidity, the static contact angle of a water droplet is measured. For the measurement of a static contact angle, a water droplet is dropped at the surface of the porous silica and the contact angle of the droplet is measured. The measurement is carried out under an atmosphere of normal temperature and normal humidity by dropping a water droplet having size of 2 $\mu$l and measuring the contact angle within 1 minute. This measurement is repeated five times or more and the average value is calculated to be the static contact angle. The heating is carried out with a hot plate or an oven.

In addition, the porous silica of the present invention preferably has less cracks after the water immersion processing. The cracks can be observed by eye or an optical microscope. Specifically, the size of the cracks is preferably 100 $\mu$m or less, more preferably 10 $\mu$m or less, further preferably 1 $\mu$m or less. Cracks above 100 $\mu$m may lower the cohesion to the base material and increase haze. Further, the ratio of areas, each of which is 1 mm x 1 mm free from cracks, to the entire surface of the porous silica is preferably 50 % or more, more preferably 70 % or more still further preferably 85 % or more. A ratio less than 50 % may impair the stability of the optical properties required for optical purposes and impair the appearance.

Possession of the above water resistance is preferable for the porous silica of the present invention because the environmental stability of indispensable elements for optical applications, such as the refractive index and the optical film thickness, can be improved.

[1-3-4. Arithmetic Surface Roughness]

The porous silica of the present invention has the arithmetic surface roughness Ra of usually 20 nm or less, preferably 15 nm or less, more preferably 7 nm or less, further preferably 5 nm or less, still further preferably 3 nm or less, particularly preferably 1 nm or less. An excessively large arithmetic surface roughness Ra may lower the homogeneity of the porous silica. In the meantime, the lower limit of the arithmetic surface roughness Ra is not particularly limited, but is usually 0. 2 nm or more, preferably 0.3 nm or more. An excessively small arithmetic surface roughness Ra has a possibility of extremely increasing the mechanical stress of the porous silica.

An arithmetic surface roughness Ra can be obtained by averaging the result of measurements of several times with P-15 Surface Profiler product of KLA-Tencor Corporation under the condition of a single scan distance 0.5 $\mu$m in conformity with the standard JIS B0601:2001.

[1-4. Advantages]

Satisfaction of the above Conditions (1) and (2) makes the porous silica of the present invention possible to maintain a low refractive index and concurrently possess a superior water resistance. Such a superior water resistance is estimated to be caused from mitigation of the distortion (internal stress) inside the porous silica and reduction in the water adsorption to the surface while easily draining out water molecules (clusters) having entered inside the porous silica.

For this reason, the porous silica of the present invention has a low refractive index, which can be controlled to fall within a desired range, so that the porous silica can be used as a low reflective material, an antireflection material and others. In other words, the porous silica of the present invention can provide a suitable refractive index as a low reflective layer to any base material, such as resin or glass.

In use of the porous silica for a low reflective layer, the porous silica is preferably installed to a base material having a predetermined size or more, which is preferably 0.1 m$^2$ or more, more preferably 0.25 m$^2$ or more, further preferably 1 m$^2$ or more. The base material having a size smaller than the above cannot cause the porous silica to exhibit a sufficiently low reflective effect.

In addition, the porous silica of the present invention has a superior smoothness and therefore is expected to be used as a light-extraction material for an electroluminescence device, for example.

Further, the porous silica of the present invention is stable when exposed to water, and therefore can be used outdoors, which means that the porous silica of the present invention can be used in a solar cell. In this usage, the porous silica of the present invention is preferably used for as a low reflective layer of a solar cell. Such a low reflective layer of a solar cell is usually formed on the outermost surface, which functions as a light capturing film. In other words, a low reflective layer of a solar cell efficiently captures the light incident on the solar cell into inside the solar cell in order to enhance the energy conversion efficiency of the solar cell.

[2. Film]

The shape of the porous silica of the present invention is not particularly limited, but is preferably a film shape because of excellent smoothness. A preferable film thickness and other properties are the same as the film thickness of the porous silica of the optical-purpose layered product that is to be detailed below.

[3. Optical-Purpose Layered Product]

The optical-purpose layered product of the present invention includes a base material and the porous silica of the present invention disposed over the base material substrate. In this case, the porous silica of the present invention is usually formed into a film shape. The optical-purpose layered product of the present invention may have one or more elements in addition to the base material and the porous silica according to the required.

[3-1. Base Material]

Any material can be used as a base material, depending on the purpose. Above all, a transparent substrate made of a versatile material is preferably used.

Examples of a material of the base material are silicate glass, such as silica glass, high purity silica glass, alkali silicate glass, alkali lead glass, soda lime glass, potash lime glass, and barium glass; glass, such as borosilicate glass, alumina silicate glass, and phosphate glass, and tempered glass thereof; acryl resin, such as Polymethylmethacrylate, crosslinking acrylate; aromatic polycarbonate resins, such as bisphenol-A based polycarbonate; polyester resins, such as polyethylene terephthalate; amorphous polyolefin resins, such as polycycloolefin; styrene resins, such as a epoxy resins, and polystyrene; polysulfone resins, such as polyethersulfone; and synthetic resins, such as a polyetherimide resin.

Among these examples, glass, a polyetherimide resin, and a polysulfone resin are preferable in the aspect of dimensional accuracy. Soda lime glass is preferable in the aspect of cost. Further, in terms of shock resistance, tempered glass is also preferably used. For cover glass used in monocrystalline solar cells and polycrystalline solar cells capable of photoelectric conversion of near-infrared light, a low-iron tempered glass, whose the less content of iron ions increases light-transparency and which further has superior mechanical shock-resistance, is preferably used since general soda lime glass has an absorption at the near-infrared region due to divalent iron ions contained therein.

These materials may be used alone or in any combination of two or more at any ratio.

The base material can have any size. In use of the base material as a substrate in the board shape, the thickness of the substrate is preferably 0. 1 mm or more, more preferably 0.2 mm or more from the viewpoints of mechanical strength and gas barrier properties. In the meantime, the thickness is preferably 80 mm or less, more preferably 50 mm or less, particularly preferably 30 mm or less from the viewpoints of weight reduction and light transmittance.

The base material can have any center line average roughness. However, in the viewpoint of layer-formability of porous silica to be deposited over the base material, the center line average roughness is preferably 10 nm or less, more preferably 8 nm or less, further preferably 5 nm or less, particularly preferably 3 nm or less.

In the case where that properties of anti-glaring is to be provided, the center line average roughness of the base material should by no means have the above values. The surface of the base material is preferably uneven. The base material may have unevenness on a single surface or on both surfaces. However, the base material preferably has an uneven surface on which the porous silica is to be deposited. Specifically, the center line average roughness is normally 0 .1 $\mu$m or more, preferably 0.2 $\mu$m or more, further preferably 0.4 $\mu$m or more, and is usually 15 $\mu$m or less, preferably 10 $\mu$m or less. The maximum height Rmax of the surface roughness is usually 0.1 $\mu$m or more, preferably 0.3 $\mu$m or more, further preferably 0.5 $\mu$m or more, particularly preferably 0.8 $\mu$m or more, and is usually 100 $\mu$m or less, preferably 80 $\mu$m or less, further preferably 50 $\mu$m or less, more preferably 30 $\mu$m or less, particularly preferably 10 $\mu$m or less. An optical-purpose layered product formed by depositing the porous silica of the present invention on the base material having a center line average roughness and a maximum height Rmax of the surface roughness in the above ranges exhibit low reflection efficient and superior anti-glaring. A center line average roughness and a maximum height Rmax of the surface roughness below or above the ranges may impair the low-reflection efficiency and may have an opaque appearance. In addition, the average interval Sm of the unevenness of the base material surface is usually 0.01 mm or more, preferably 0.03 mm or more, and can be usually 30 mm or less, preferably 15 mm or less. The center line average roughness, the maximum height Rmax of the surface roughness, and the average interval Sm of the unevenness are measured with a general-purpose surface roughness meter (e.g.. SURFCOM 570A produced by TOKYO SEIMITSU CO., LTD) in conformity with JIS-B0601:1994.

[3-2. Porous Silica of the Optical-purpose Layered Product]

The optical-purpose layered product uses porous silica detailed above as the porous silica of the present invention.

The porous silica of the present invention is deposited directly on the base material or over the base material being interposed by one or more other layers, but is usually shaped into a film form. In this case, the film thickness of the porous silica of the present invention is not particularly limited, but is preferably 100 nm or more, more preferably 120 nm or more, particularly preferably 150 nm or more. An excessively thin film thickness causes the interface between the porous silica of the present invention and another material (for example, an interface between the base material and porous silica formed by intimate contact thereof) to dominantly affect the distortion inside the porous silica and the surface properties of the porous silica so that the film quality and the water resistance of the optical-purpose layered product of the present invention may decline. Meanwhile, the upper limit of the film thickness is preferably 10 $\mu$m or less, more preferably 8 $\mu$m or less, particularly preferably 5 $\mu$m or less. An excessively large film thickness may extremely increase the distortion inside the porous silica and consequently impair the film formability of the porous silica. Accordingly, the porous silica of the present invention having the above preferable film thickness makes the optical-purpose layered product of the present invention have effective optical properties and property stabilities adequate to serve as one of the materials constituting of an optical-purpose product.

The surface roughness of the porous silica of the optical-purpose layered product may be affected by the surface roughness of the base material. When the surface of the base material is uneven, the surface roughness of the porous silica of the optical-purpose layered product is approximately the same as the surface roughness of the substrate described above.

[3-3. Other Structural Component]

The optical-purpose layered product of the present invention may have another structural component as required. For example, the layered product may have an electrode on the other surface of the base material of the surface with the porous silica.

Such an optical-purpose layered product having a base material having one surface with porous silica and the other surface with an electrode is preferably used as a component of optical devices such as a display and a solar cell.

The electrode may be formed directly on the substrate or may be over the substrate interposed by another layer, and is formed by aluminum, tin, magnesium, gold, silver, copper, nickel, palladium, platinum, alloy containing one or more of these metals, indium tin oxide (ITO), indium zinc oxide (IZO), indium oxide, and zinc oxide. Above all, from the viewpoint of transparency, indium tin oxide (ITO), indium zinc oxide (IZO), indium oxide, zinc oxide, and a material containing any of the above oxides as a main component. These materials can be used alone or in any combination of two or more at any ratio. The film thickness of the electrode is usually 10 nm or more, preferably 40 nm or more, more preferably 80 nm or more, still further preferably 100 nm or more, and is usually 500 nm or less, preferably 400 nm or less, more preferably 300 nm or less, still further preferably 200 nm or less. A film thickness below 10 nm tends to result in defects of the film while a film thickness above 500 nm may impair transparency.

Here, an example in which the optical-purpose layered product of the present invention is used as a solar cell is shown in Fig. 1. For example, in use of the optical-purpose layered product of the present invention as a solar cell, porous silica 6 and a base material 5 are usually configured to serve as a cover of a light-reception surface through which the solar cell obtains light energy.

Further, a solar cell usually includes electrodes 1 and 3, serving as a pair, between which a semiconductor layer 2 is interposed.

An intermediate layer 4 may be interposed between the substrate 5 and the electrode 3. In addition, the intermediate layer 4 may be used in combination with a heat ray shielding layer, an anti-UV-deterioration layer, a hydrophilic layer, anti-soil layer, an anti-fogging layer, a moistureproofing layer, an adhesive layer, a hard layer, a conductive layer, a reflection layer, an anti-glaring layer, and a diffusion layer (not shows).

Here, a solar cell is an element or a device capable of converting light energy to electricity through the use of the photovoltaic effect, and is exemplified by a silicon solar cell, such as a monocrystalline silicon solar cell, a polycrystalline silicon solar cell, or an amorphous silicon solar cell; a inorganic composite solar cell, such as a CIS solar cell, a CIGS solar cell, a GaAs solar cell; a dye-sensitization solar cell; an organic film solar cell; a multi-junction solar cell; and a HIT solar cell, to which the solar cell is not however limited.

A semiconductor layer is a layer containing a semiconductor material. In a solar cell, absorbing light usually causes the semiconductor to generate electric energy, and the electric energy is taken out of the solar cell as a battery function.

The kind of semiconductor used in the semiconductor layer is not limited. In addition, the semiconductor may be a single kind or may be any combination of two or more kinds at any ratio. Further, the semiconductor layer may contain another material unless significantly impairing the function of a solar cell.

The semiconductor layer may be formed of a single layer or may be formed of two or more layers. The specific types of the semiconductor layer of a solar cell may be of, for example, bulk-hetero junction, layered type (hetero pn junction), Schottky, or hybrid type.

The thickness of the semiconductor layer is not particularly limited, but is formed to have a size of usually 5 nm or more, preferably 10 nm or more, and is usually 10 $\mu$m or less, preferably 5 $\mu$m or less.

In the meantime, the electrodes can be formed of any conductive material. The electrodes obtain the electric energy generated in the semiconductor layer. At least one of a pair of electrodes is preferably transparent, depending on the kind of semiconductor layer (in other words, preferably transmits the light that the semiconductor layer absorbs so that the solar cell generates electricity).

The examples of a transparent material of the electrode are oxide, such as ITO, indium zinc oxide (IZO); and a thin metal film. These materials may be used alone or in any combination of two or more at any ratio.

Further, each of the electrodes may be formed by depositing two or more layers, and may have improved characteristics (such as electric characteristics and wetting characteristics) obtained through surface processing.

In use of the optical-purpose layered product of the present invention as a solar cell, the entire light transmittance of C light from the porous silica to the semiconductor layer is preferably 80 % or higher, more preferably 83 % or higher, further preferably 86 % or higher, particularly preferably 90 % or higher because the higher light transmittance allows the solar cell to efficiently generate electricity. The entire light transmittance is ideally 100 %, but is usually 99 % or lower considering partial reflection on the surface of the optical-purposelayered product. Possession of both a low refractive index and a superior water resistance makes the porous silica of the present invention exhibit characteristics extremely suitable for a solar cell.

In use of the optical-purpose layered product of the present invention as a solar cell, the entire light transmittance of C light of the porous silica and the base material is preferably 80 % or higher, more preferably 83 % or higher, further preferably 86 % or higher, particularly preferably 90 % or higher because the higher light transmittance allows the solar cell to efficiently generate electricity. The entire light transmittance is ideally 100 %, but is usually 99 % or lower considering partial reflection on the surface of the optical-purpose layered product. Possession of both a low refractive index and a superior water resistance makes the porous silica of the present invention exhibit characteristics extremely suitable for a solar cell.

Even in use of the optical-purpose layered product of the present invention to an application other than a solar cell, the porous silica usually has a high light transmittance because possession of a high light transmittance makes the optical-purpose layered product of the present invention possible to have efficient optical properties and property stabilities suitable to usage as a component of an optical-purpose product.

The optical-purpose layered product of the present invention is preferably used as an electroluminessence (EL) element because of possession of a superior water resistance and a smooth surface.

The electroluminescence element of the present invention sufficiently includes a porous film of the present invention, two electrodes, and an electroluminescence layer disposed between the two electrodes. The element usually can have a sequence of (i) the electrode (negative electrode); (ii) the electroluminescence layer; (iii) the electrode (positive electrode); (iv) the porous film of the present invention, and (v) a light transmitting block. As long as the above order is maintained, the element may have one or more additional layers between these layers. For example, a light diffusion layer and/or a high refractive-index layer may be interposed between (iii) the electrode (positive electrode) and (iv) the porous film of the present invention.

The material of

(i) the negative electrode is preferably metal having a low work function and particularly is aluminum, tin, magnesium, indium, calcium, gold, silver, copper, nickel, chromium, palladium, platinum, a magnesium-silver alloy, a magnesium-indium alloy, an aluminum-lithium alloy, among which aluminum is particularly preferable. The thickness of the negative electrode is usually 10 nm or more, preferably 30 nm or more, more preferably 50 nm or more, and is usually 1000 nm or less, preferably 500 nm or less, more preferably 300 nm or less.

(ii) the electroluminescence layer is made of a material which exhibits a luminous phenomenon when an electric field is applied. Examples of the material are conventional inorganic EL materials, such as an activated zinc oxide $ZnS:X$ (where, X is an activated element, such as Mn, Tb, Cu, or Sm), CaS:Eu, SrS:Ce, $SrGa_2S_4$:Ce, $CaGa_2S_4$: Ce, CaS: Pb, and $BaAl_2S_4$:Eu: a conventional organic EL materials of a low-molecule die organic EL material, such as an aluminum complex of 8-hydroxy quinoline, aromatic amines, and anthracene monocrystal, and conjugate polymer organic EL material, such as poly(p-phenylenevinylene), poly[2-methoxy-5-(2-ethylhexyloxy)-1,4-phenylenevinylene], poly(3-alkylthiophene), polyvinylcarbazole. The thickness of the electroluminescence layer is usually 10 nm or more, preferably 30 nm or more, more preferably 50 nm or more, and is usually 1000 nm or less, preferably 500 nm or less, more preferably 200 nm or less. The electroluminescence layer can be fabricated through vacuum film formation processing, such as vacuum evaporation or sputtering, or wet-coating processing through the use of xylene, toluene, cyclohexylbenzene and others as the solvent.

(iii) the positive electrode is preferably formed of a film of a complex oxide such as tin-added indium oxide (usually called ITO), aluminum-added zinc oxide (usually called AZO), or indium-added zinc oxide (usually called IZO), among which ITO is particularly preferable.

The positive electrode may be formed into a transparent electrode layer having transparency of visible light. When the positive electrode takes the form of a transparent electrode layer, a higher light transmittance in the visible light wavelength region is more preferable. The lower limit thereof is usually 50 % or higher, preferably 60 % or higher, more preferably 70 % or higher, and the upper limit thereof is usually 99 % or lower. For the electric resistance of the positive electrode, a lower sheet resistance is more preferable, and is usually 1 $\Omega/\square$ (ohm per square; $\square$=1cm$^2$) or more, and is usually 100 $\Omega/\square$ or less, preferably 70 $\Omega/\square$ or less, more preferably 50 $\Omega/\square$ or less.

The thickness of the positive electrode provided in the form of a transparent electrode is not particularly limited as long as the electrode satisfies the above light transmittance and the above sheet resistance. However, the thickness is usually 0.01 $\mu$m or more, and from the viewpoint of conductivity, is preferably 0. 03 $\mu$m or more, more preferably 0.05 $\mu$m or more. The upper limit thereof is usually 10 $\mu$m or less, and from the viewpoint of light transmittance, is preferably 1 $\mu$m or less, more preferably 0.5 $\mu$m or less.

The optical-purpose layered product of the present inventionmay include, for example, an additional optical function layer and protection layer. Such an additional optical function layer can be appropriately selected depending on the application. Such additional layer may take a form of a single layer or of any combination of two or more layers..

[3-4. Advantages]

The optical-purpose layered product of the present invention has a low refractive index and superior water resistance due to the inclusion of the porous silica of the present invention. Therefore, the porous silica of the present invention can be preferably applied to, for example, a low reflective layer, an anti-reflective layer, and a light emitting improved layer for an electroluminescence device. In particular, taking the advantage of superior water resistance, the porous silica can be used outdoors, so that the porous silica of the present invention is particularly preferably applied to a low reflective layer of a solar cell.

[4. Composition]

The composition of the present invention forms the porous silica of the present invention and therefore serves as a composition for forming porous silica. Curing the composition of the present invention obtains the porous silica of the present invention.

The composition of the present invention contains at least one kind selected from a group consisting of tetraalkoxysilanes, and hydrolysates and partial condensates thereof (hereinafter the group is appropriately called the "tetraalkoxysilane group") and at least one kind selected from a group consisting of alkoxysilanes other than the above tetraalkoxysilanes (hereinafter appropriately called "other alkoxysilanes"), and hydrolysates and partial condensates thereof (hereinafter the group is appropriately called the "other alkoxysilane group"), and/or at least one kind of partial condensate (hereinafter appropriately called "particular partial condensate")of at least one kind selected from the tetraalkoxysilane group and at least one kind selected from the other alkoxysilane group; and water; and an organic solvent; and catalyst; and a non-ionic polymer having an ethylene oxide moiety. Additionally the composition satisfies the following (3) to (6).

(3) The ratio of silicon atoms derived from tetraalkoxysilanes to silicon atoms derived from the entire alkoxysilanes is 0.3 (mol/mol) to 0.7 (mol/mol).
(4) The ratio of silicon atoms derived from the entire alkoxysilanes to water is 10 (mol/mol) or higher.
(5) The non-ionic polymer having an ethylene oxide moiety has a weight-average molecular weight of 4,300 or more.
(6) 80 wt% or higher of the organic solvent is solvent having a boiling point of from 55 °C to 140 °C.

[4-1. Alkoxysilanes]

The composition of the present invention contains at least the following first and/or second compounds (compound groups) for the alkoxysilanes.

[First Compound (Group)]

A combination of at least one kind selected from the tetraalkoxysilane group (i.e., a group consisting of tetraalkoxysilanes, hydrolysate and partial condensates thereof) and at least one kind selected from the other alkoxysilane group (i.e., a group consisting of other alkoxysilanes, hydrolysate and partial condensates thereof).

[Second Compound (Group)]

A particular partial condensate (i.e., a partial condensate of at least one kind selected from the tetraalkoxysilane group and at least one kind selected from the other alkoxysilane group).

[4-1-1. Tetraalkoxysilane Group]

The tetraalkoxysilanes are not particularly limited. Preferable examples are tetramethoxysilane, tetraethoxysilane, tetra(n-propoxy)silane, tetraisopropoxysilane, tetra(n-butoxy)silane. Examples of the tetraalkoxysilane group are also hydrolysate, and partial condensates (oligomer or the like) of the above tetraalkoxysilanes.

From the viewpoints of stability and productivity of the composition of the present invention, tetramethoxysilane, tetraethoxysilane and oligomers thereof are preferable, and tetraethoxysilane is further preferable.

However, tetraalkoxysilanes tend to easily hydrolyze and partially condensate as time passage. Therefore, even when only tetraalkoxysilanes are prepared, hydrolysates and partial condensates of the prepared tetraalkoxysilanes are usually present along with the tetraalkoxysilanes, in most cases.

Compounds belonging to the tetraalkoxysilane group can be used alone or in any combination of two or more at any ratio.

[4-1-2.other alkoxysilane group]

As the other alkoxysilane group, any alkoxysilane that does not belong to the abovetetraal koxysilane group can be used. Preferable Examples are trialkoxysilanes, such as trimethoxysilane, triethoxysilane, methyltrimethoxysilane, methyltriethoxysilane, phenyltrimethoxysilane, and phenyltriethoxysilane; dialkoxysilane, such as dimethyldimethoxysilane, dimethyldiethoxysilane, diphenyldimethoxysilane, and diphenyldiethoxysilane; compounds in each of which two or more trialkoxysilyl groups are combined to organic moieties, such as bis(trimethoxysilyl)methane, bis(triethoxysilyl)methane, 1,2-bis(trimethoxysilyl)ethane, 1,2-bis(triethoxysilyl)ethane, 1,4-bis(trimethoxysilyl)benzene, 1,4-bis(triethoxysilyl)benzene, and 1,3,5-tris(trimethoxysilyl)benzene; compounds having an alkyl group which is to be substituted with a silicon atom and which has a reactive functional group, such as 3-aminopropyltrimethoxysilane, 3-aminopropyltriethoxysilane, 3-glycidyloxypropyltrimethoxysilane, 3-glycidyloxypropyltriethoxysilane, 3-mercaptopropyltrimethoxysilane, 3-acryloyloxypropyltrimethoxysilane, and 3-carboxypropyltrimethoxysilane.

Further, examples of the other alkoxysilane group are also hydrolysate, and partial condensates (oligomer or the like) of the above other alkoxysilanes.

Above all, monoalkylalkoxysilanes and dialkylalkoxysilanes each having an aromatic hydrocarbon group or an aliphatic hydrocarbon group are preferable, and are specifically exemplified by methyltrimethoxysilane, methyltriethoxysilane, phenyltrimethoxysilane, phenyltriethoxysilane, dimethyldimethoxysilane, and dimethyldiethylsilane.

However, the other alkoxysilanes tend to easily hydrolyze and partially condensate over time. Therefore, even when only other alkoxysilanes are prepared, hydrolysates and partial condensates of the prepared alkoxysilanes are usually present along with the alkoxysilanes, in most cases.

Compounds belonging to the other alkoxysilane group may be used alone or may be used in any combination of two or more at any ratio.

[4-1-3. Partial Condensate of Tetraalkoxysilane Group and Other Alkoxysilane Group]

As the particular partial condensate, any partial condensate formed by partially condensing at least one kind selected from the tetraalkoxysilane group and at least one kind selected from the other alkoxysilane group. Preferable examples of the particular partial condensate are formed by partially condensing one from the above preferable examples of the tetraalkoxysilanes and one from the above preferable examples of the other alkoxysilanes.

Further, the particular partial condensate may be used alone or may be used in any combination of two or more kinds at any ratio. Further, the particular partial condensate may be used alone or may be used in conjunction with the above tetraalkoxysilanes and/or the other alkoxysilanes.

[4-1-4. Preferable Combinations]

Among the above combinations of tetraalkoxysilanes and other alkoxysilanes, preferable combinations are tetraethoxysilane for the tetraalkoxysilanes and monoalkylalkoxysilane or a dialkylalkoxysilane having an aromatic hydrocarbon group or an aliphatic hydrocarbon group for other alkoxysilanes. Such combinations can obtain porous silica having uniformity and durability

[4-1-5. Ratio of Alkoxysilanes]

The above alkoxysilanes contained in the composition of the present invention satisfies below Condition (3), that is, the ratio of silicon atoms derived from the tetraalkoxysilanes to silicon atoms derived from the entire alkoxysilanes is 0.3 (mol/mol) or more, preferably 0.35 (mol/mol) or more, preferably 0.4 (mol/mol) or more and is 0.7 (mol/mol) or less, preferably 0.65 (mol/mol) or less, further preferably 0.6 (mol/mol) or less (Condition (3)). When the ratio is too small, the resultant porous silica has high hydrophobicity, but there is a possibility that a less number of -O-Si-O- bindings cause the resultant porous silica to have an extreme low mechanical strength and a low water resistance. In the meantime, if the above ratio is excessively large, a large number of silanol groups remain in the resultant porous silica and may therefore lower the water resistance.

Here, the silicon atoms derived from the entire alkoxysilanes represent the total number of silicon atoms contained in the tetraalkoxysilane group, the other alkoxysilane group, and the particular partial condensates included in the composition of the present invention. The silicon atoms derived from the tetraalkoxysilanes represent the total number of silicon atoms belonged to the tetraalkoxysilane group included in the composition of the present invention and the silicon atoms belonged to the partial structure corresponding to the tetraalkoxysilane group in the particular partial condensates. Accordingly, even if the composition of the present invention contains silicon atoms, silicon atoms contained in the compound are not considered in the calculation of the above ratio.

The ratio of silicon atoms derived from the tetraalkoxysilanes to silicon atoms derived from the entire alkoxysilanes can be measured by means of Si-NMR.

The silicon-atom-containing compound is contained in the composition at usually 0.05 wt% or higher, preferably 0.1 wt% or higher, more preferably 0.5 wt% or higher, further preferably 1 wt% or higher, and usually 70 wt% or lower, preferably 50 wt% or lower, more preferably 40 wt% or lower, further preferably 20 wt% or lower. The content lower than 0.05 wt% may lower the capability of film formation, causing unevenness of film thickness, and the content higher than 70 wt% may lower the stability of the composition. The silicon-atom-containing compound is a compound containing silicon atoms and is exemplified by the tetraalkoxysilanes, the tetraalkoxysilane group, the other alkoxysilanes, and the other alkoxysilane group, and the particular partial condensates listed above.

From the aspect of a production process of the porous silica, the solid concentration including the above silicon-atom-containing compound and a non-ionic polymer to be described below is usually 0.1 wt% or higher, preferably 0.5 wt% or higher, more preferably 1 wt% or higher, and is usually 50 wt% or lower, preferably 40 wt% or lower, more preferably 35 wt% or lower.

[4-2. Water]

The composition of the present invention contains water. A higher purity of water to be used is more preferable. Satisfactory water is one that has been subjected to either one or both of ion exchanging and distillation. However, in use of the porous silica of the present invention for application, such as optical-purpose layered product of the present invention, which does not particularly tolerate minute impurities, the water to be used is particularly further higher in purity. Therefore, ultrapure water obtained through ion exchanging distilled water is preferably used. For a specific example, water obtained through a filter having a mesh size of, for example, 0.01 $\mu$m through 0.5 $\mu$m.

The usage of water should meet the below Condition (4). Namely, the ratio of water to silicon atoms derived to the entire alkoxysilanes is 10 (mol/mol) or higher, preferably 11 (mol/mol) or higher, more preferably 12 (mol/mol) or higer (Condition(4)). The lower ratio of water to silicon atoms derived from the entire alkoxysilanes than the above range makes it difficult to control the sol-gel reaction and therefore there is a possibility to create a porous silica which has a short pot life and which has surface being extremely hydrophobic. For the above, the resultant porous silica may have low water resistance and have a rough surface.

The amount of water can be measured through Karl Fischer titration (coulometric titration).

[4-3. Organic Solvent]

The composition of the present invention contains an organic solvent, which is not limited as long as the composition satisfies Condition (6). Above all, it is preferable that one or more kinds of organic solvent that makes water and the above alkoxysilanes miscible are used. Preferable examples of the organic solvent are alcohols exemplified by monohydric alcohols with one to four carbon number, such as methanol, ethanol, 1-propanol, 2-propanol, 1-butanol, 2-butanol, t-butanol, and 1-pentanol, dihydric alcohols with the one to four carbon number, polyhydric alcohols, such as glycerol, and pentaerythritol; ethers or esters of the above alcohols, such as diethylene glycol, ethylene glycol monomethyl ether, ethylene glycoldimethyl ether, 2-ethoxyethanol, propylene glycolmonomethylethers, propyleneglycol methyletheracetate; ketones, such as acetone, and methylethylketone; amides, such as formamide, N-methylformamide, N-ethylformamide, N,N-dimethylformamide, N,N-diethylformamide, N-methylacetamide, N-ethylacetamide, N,N-dimethylacetamide, N,N-diethylacetamide, N-methylpyrrolidone, N-formylmorpholine, N-acetylmorpholine, N-formylpiperidine, N-acetylpiperidine, N-formylpyrrolidine, N-acetylpyrrolidine, N,N'-diformylpiperazine, N,N'-diformylpiperazine, and N,N'-diacetylpiperazine; lactones, such as $\gamma$-butyrolactone; ureas, such as tetramethylurea, N,N'-dimethylimidazolidine; and dimethyl sulfoxide. Among these examples, for hydrolysis of contained alkoxysilanes under more stable conditions, alcohols are preferable, and monohydric alcohols are more preferable.

These organic solvents may be used alone or in any combination of two or more kinds at any ratio. In particular, to surely obtain porous structure low in refractive index and superior in water resistance in the porous silica of the present invention, two or more organic solvents are preferably used in the form of the mixture thereof.

In aspect of film formability of the composition, a small amount of an ether or an ester with a high boiling point can be added.

For molding the composition of the present invention into a film and forming an uniform porous silica through heating processing, it is preferable that the heat processing concurrently carries out curing (condensation of the alkoxysilanes) to some extent and removal of water. Accordingly, an organic solvent is preferably used which volatilizes an organic solvent contained in the composition of the present invention in a temperature range in which water present in the proximity of the surface and the inside the composition can be removed to some extent.

Accordingly, the composition of the present invention is made to contain an organic solvent having a boiling point in a predetermined range at a high ratio, specifically to satisfy the following Condition (6). That is, at least one kind of organic solvent having a boiling point of 55 °C or higher, preferably 60 °C or higher, more preferably 65 °C or higher and 140 °C or lower, preferably 135 °C or lower, more preferably 130 °C or lower (hereinafter appropriately called the "solvent having a predetermined boiling point") is used, and the ratio of the solvent having a predetermined boiling point to the entire organic solvent is 80 wt% or higher, preferably 83 wt% or higher, more preferably 85 wt% or higher (Condition (6)). The upper limit of the ratio is 100 wt%. If the boiling point is excessively low, the composition of the present invention cures through insufficient sol-gel reaction, so that the porous silica of the present invention has a possibility to have an extremely poor water resistance. In the meantime, if the boiling point is excessively high, the sol-gel reaction locally proceeds to make the porous silica of the present invention heterogeneous, which may have low surface properties and a low water resistance. Further, if the ratio of the solvent having a predetermined boiling point is low, the above advantages may not be attained. Considering the above aspects, examples of the solvent having a predetermined boiling point are ethanol, 1-propanol, t-butanol, 2-propanol, 1-butanol, 1-pentanol, and ethylacetate. Accordingly, the organic compound preferably uses at least one selected from these examples.

The amount of the entire organic solvent to be used can be any amount unless significantly impairing the effects of the present invention. However, the usage amount of the entire organic solvent to silicon atoms derived from the entire alkoxysilanes is usually 0.01 mol/mol or more, preferably 0.1 mol/mol or more, particularly preferably 1 mol/mol or more, and is usually 100 mol/mol or less, preferably 70 mol/mol or less, particularly preferably 20 mol/mol or less. An excessively small amount of the organic solvent may cause the resultant porous silica to have low surface properties while an excessively large amount may cause the resultant porous silica formed into a film on a substrate to be easily affected by the surface energy of the substrate.

[4-4. Catalyst]

The composition of the present invention contains a catalyst, which can be any substance capable of enhancing the hydrolysis and dehydration condensation of the above alkoxysilanes.

Examples of the catalyst are acids, such as hydrochloric acid, nitric acid, sulfuric acid, formic acid, acetic acid, oxalic acid, and maleic acid; amines, such as ammonia, butylamine, dibutylamine, and triethylamine; bases, such as pyridine; Lewis acids, such as an acetylacetone complex of aluminum.

Additional example of the catalyst is metal chelate compounds, the metal species of which are exemplified by titanium, aluminum, zirconium, tin, and antimony. Examples of the metal chelate compounds can be listed below.

That is, examples of an aluminum complex are aluminum chelate compounds, such as di-ethoxy· mono(acetylacetonate)aluminium, di-n-propoxy· mono(acetylacetonate)aluminum, di-isopropoxy· mono(acetylacetonate)aluminum, di-n-butoxy· mono(acetylacetonate)aluminum, di-sec-butoxy· mono(acetylacetonate)aluminum, di-tert-butoxy· mono(acetylacetonate)aluminum, monoethoxy· bis(acetylacetonate)aluminum, mono-n-propoxy· bis(acetylacetonate)aluminum, monoisopropoxy· bis(acetylacetonate)aluminum, mono-n-butoxy· bis(acetylacetonate)aluminum, mono-sec-butoxy· bis(acetylacetonate)aluminum, mono-tert-butoxy· bis(acetylacetonate)aluminum, tris(acetylacetonate)aluminum, diethoxy· mono(ethylacetoacetate)aluminum, di-n-propoxy· mono(ethylacetoacetate)aluminum, diisopropoxy· mono(ethylacetoacetate)aluminum, di-n-butoxy· mono(ethylacetoacetate)aluminum, di-sec-butoxy· ::ono(ethylacetoacetate)aluminum, di-tert-butoxy· mono(ethylacetoacetate)aluminum, manoethoxy· bis(ethylacetoacetate)aluminum, mono-n-propoxy· bis(ethylacetoacetate)aluminum, monoisopropoxy· bis(ethylacetoacetate)aluminum, mono-n-butoxy· bis(ethylacetoacetate)aluminum, mono-sec-butoxy· bis(ethylacetoacetate)aluminum, mono-tert-butoxy· bis(ethylacetoacetate)aluminum, and tris(ethylacetoacetate)aluminum.

Examples of a titanium complex are triethoxy· mono(acetylacetonate)titanium, tri-n-propoxy· mono(acetylacetonate)titanium, triisopropoxy· mono(acetylacetonate)titanium, tri-n-butoxy· mano(acetylacetonate)titanzum, tri-sec-butoxy· mono(acetylacetonate)titanium, tri-tert-butoxy mono(acetylacetonate)titanium, diethoxy bis(acetylacetonate)titanium, di-n-propoxy· bis(acetylacetonate)titanium, diisopropoxy· bis(acetylacetonate)titanium, di-n-butoxy bis(acetylacetonate)titanium, di-sec-butoxy bis(acetylacetonate)titanium, di-tert-butoxy· bis(acetylacetonate)titanium, monoethoxy tris(acetylacetonate)titanium, mono-n-propoxy· tris(acetylacetonate)titanium, monoisopropoxy· tris(acetylacetonate)titanium, mono-n-butoxy· tris(acetylacetonate)titanium, mono-sec-butoxy· tris(acetylacetonate)titanium, mono-tert-butoxy· tris(acetylacetonate)titanium, tetrakis(acetylacetonate)titanium, triethoxy· mono(ethylacetoacetate)titanium, tri-n-propoxy· mono(ethylacetoacetate)titanium, triisopropoxy· mono(ethylacetoacetate)titanium, tri-n-butoxy· mono(ethylacetoacetate)titanium, tri-sec-butoxy, mono(ethylacetoacetate)titanium, tri-tert-butoxy· mono(ethylacetoacetate)titanium, diethoxy· bis(ethylacetoacetate)titanium, di-n-propoxy· bis(ethylacetoacetate)titanium, diisopropoxy· bis(ethylacetoacetate)titanium, di-n-butoxy· bis(ethylacetoacetate)titanium, di-sec-butoxy· bis(ethylacetoacetate)titanium, di-tert-butoxy· bis(ethylacetoacetate)titanium, monoethoxy· tris(ethylacetoacetate)titanium, mono-n-propoxy· tris(ethylacetoacetate)titanium, monoisopropoxy· tris(ethylacetoacetate)titanium, mono-n-butoxy· tris(ethylacetoacetate)titanium, mono-sec-butoxy· tris(ethylacetoacetate)titanium, mono-tert-butoxy· tris(ethylacetoacetate)titanium, tetrakis(ethylacetoacetate)titanium, mono(acetylacetonate)tris(ethylacetoacetate)titanium, bis(acetylacetonate)bis(ethylacetoacetate)titanium, and tris(acetylacetonate)mono(ethylacetoacetate)titanium

Among the above examples, acids or metal chelate compounds are preferable to more easily control hydrolysis and dehydration condensation of the alkoxysilanes, and acids are more preferable.

These catalysts may be used alone or in any combination of two or more at any ratio.

The usage amount of the catalyst can be any amount unless significantly impairing the effects of the present invention. However, the catalyst usage amount to the alkoxysilanes is usually 0.001 times by molar or more, preferably 0.003 times by molar or more, particularly preferably 0.005 times by molar or more, and is usually 0. 8 times by molar or less, preferably 0. 5 times by molar or less, particularly preferably 0.1 times by molar or less. An excessively small usage amount of the catalyst does not appropriately proceed hydrolysis so that active groups, such as silanol groups, tend to remain in the resultant produced silica, which causes the porous silica to have a low water resistance. Conversely, an excessively large usage amount makes it difficult to control the reaction and additionally increase in the catalyst concentration during the reaction may lower the surface properties of the resultant porous silica.

From the aspect of film formability, the pH of the composition is preferably 5.5 or lower, more preferably 4.5 or lower, further preferably 3 or lower, still further preferably 2 or less. Setting the pH in this range can improve the surface quality of the substrate concurrently in film formation, thereby further improving film formability.

[4-5. Non-ionic Polymer]

The composition of the present invention contains a non-ionic polymer having an ethylene oxide moiety (hereinafter called the "non-ionic polymer of the present invention"). However, the non-ionic polymer of the present invention meets the following Condition (5), that is, the weight-average molecular weight of the non-ionic polymer of the present invention is 4,300 or more, preferably 5,000 or more, further preferably 6,000 or more (Condition (5)). An excessively small weight-average molecular weight of the non-ionic polymer of the present invention makes it difficult to keep the porosity of the porous silica high so that there is a possibility that porous silica with a low refractive index cannot be constantly produced. The upper limit of the weight-average molecular weight can be any number unless significantly impairing the effects of the present invention, but is usually 100,000 or less, preferably 70,000 or less, more preferably 40,000 or less. An excessively large weight-average molecular weight cannot produce homogeneous porous silica, lowering the water resistance of the porous silica.

The non-ionic polymer of the present invention has an ethylene oxide moiety. The possession of an ethylene oxide moiety makes the non-ionic polymer of the present invention stable to hydrolysates and condensates of alkoxysilanes generated through the sol-gel reaction of alkoxysilanes.

At this time, the content of the ethylene oxide moiety in the non-ionic polymer of the present invention can be any value unless significantly impairing the effects of the present invention, but is usually 20 wt% or higher, preferably 23 wt% or higher, more preferably 25 wt% or higher and is usually 100 wt% or lower, preferably 90 wt% or lower, more preferably 85 wt% or lower. The content of the ethylene oxide moiety within the above range can make the non-ionic polymer of the present invention further stable to hydrolysates and condensates of alkoxysilanes generated through the sol-gel reaction of alkoxysilanes.

The main chain of the non-ionic polymer of the present invention is not particularly limited as long as the polymer has the ethylene oxide moiety and satisfies the above Condition (5). Examples of the main chain are polyether, polyester, polyurethane, polyolefin, polycarbonate, polydiene, polyvinylether, polystyrene, and derivatives thereof, among which a polymer having the component of polyether is preferable. Examples of such a polymer are polyethylene glycol (hereiafter appropriately called "PEG"), polypropylene glycol, and polyisobutyleneglycol. Above all, a (polyethylene oxide)-(polypropylene oxide)-(polyethylene oxide) triblockpolymer and/or polyethylene glycol are particularly preferable.

The non-ionic polymers of the present invention may be used alone or in any combination of two or more at any ratio.

The usage amount of the non-ionic polymer of the present invention can be any amount unless significantly impairing the effects of the present invention. However, the ratio of the non-ionic polymer of the present invention to silicon atoms derived from the entire alkoxysilanes is usually 0.001 (mol/mol) or higher, preferably 0.002 (mol/mol) or higher, more preferably 0.003 (mol/mol) or higher, and is usually 0. 05 (mol/mol) or lower, preferably 0.04 (mol/mol) or lower, more preferably 0.03 (mol/mol) or lower. An excessively low ratio makes it impossible for the porous silica of the present invention to have a sufficient porous structure, which has a possibility that a low refractive index efficient for optical usages cannot be attained. In the meantime, an excessively high ratio causes the non-ionic polymer of the present invention to excessively precipitate out onto the surface of the resultant porous silica of the present invention, resulting in a possibility of rough surface.

In order to keeping high purities for application of optical usages, it is preferable that the non-ionic polymer of the present invention does not contain cation. If cation is contained, the amount of contained cation is preferably small. The amount of cation contained in the non-ionic polymer of the present invention is preferably 10 wt% or lower, more preferably 5 wt% or lower, still further preferably 1 wt% or lower. If the cation component remains, there are possibilities of lowering the functions of the base material and coloring the resultant porous silica of the present invention.

[4-6. Others]

As long as the porous silica of the present invention can be produced, the composition of the present invention may contain an additional component besides alkoxysilanes, water, the organic solvent, the catalyst and the non-ionic polymer of the present invention that are detailed above. Such an additional component may be used a single kind or in any combination of two or more kinds at any ratio.

[4-7. Advantages]

The composition of the present invention can generate the porous silica of the present invention that is low in refractive index and superior in water resistance. The specific method for generating the porous silica of the present invention from the composition of the present invention will be detailed below.

Further, since the composition of the present invention has a long pot life and is therefore stable, the porous silica can be produced more stably as compared with conventional techniques.

Further, the composition of the present invention can cause the resultant porous silica to have superior water resistance and a refractive index in a desired range.

[5. Method for Producing Porous Silica]

The method for producing the porous silica of the present invention is not limited. However, the porous silica of the present invention is usually produced by forming the above composition of the present invention into a desired form, such as a film, and then curing the composition by heating. Hereinafter, this method for producing (hereinafter called the production method of the present invention") will now be detailed.

In the production method of the present invention, the composition of the present invention is prepared, formed into a film, and heated to thereby produce the porous silica of the present invention. Further, the production method of the present invention may include an additional step according to the requirement. For example, the composition of the present invention may be ripened during or after the preparation of the composition, and the porous silica of the present invention having been cured may be cooled or be subjected to postprocessing.

[5-1. Preparation Step]

In the preparation step, the components constituting the composition of the present invention are mixed to prepare the composition of the present invention. At that time, the order of addition of the components is not limited. Further, each component may be mixed all at the same time or may be continuously or continually mixed separately two or more times.

In order to industrially prepare the composition of the present invention by controlling the sol-gel reaction process, which has conventionally been considered to be difficult to control, the following mixing manner is preferable. Specifically, the alkoxysilanes, water, the catalyst, and the solvent are mixed and the mixture is then aged so that the alkoxysilanes can be hydrolyzed and dehydration condensed to some extent. The mixture and the non-ionic polymer of the present invention are mixed and thereby the composition of the present invention is prepared. This manner can maintain the affinity of the alkoxysilanes and the non-ionic polymer under the sol-gel reaction conditions. Alternatively, aging can be carried out after mixing with mixture and the ionic polymer of the present invention.

For the purpose of proceeding the hydrolysis and the dehydration condensation during the above aging, the mixture is preferably heated. The heating conditions are not particularly limited as long as the temperature does not exceed the boiling point of the solvent to be used, and is usually 40 °C or higher, more preferably 50 °C or higher, particularly preferably 60 °C or higher. An excessively low heating temperature extremely prolongs the reaction time, which may lower the productivity. The upper limit of the heating temperature is preferably 100 °C or lower, more preferably 95 °C or lower. At above 100 °C, the water contained in the composition of the present invention boils, which has a possibility that hydrolysis and dehydration condensation cannot be controlled.

The aging time period is not particularly limited, but is usually 10 minutes or longer, preferably 20 minutes or longer, more preferably 30 minutes or longer, and is usually 10 hours or shorter, preferably 8 hours or shorter, more preferably 5 hours or shorter. An excessively short ripening time period may make it difficult to uniformly proceed the aging reaction while an excessively long ripening time period makes volatilization of the solvent unneglectable so that variation in composition ratio may lower the stability of the composition and that the resultant porous silica may have a low water resistance.

The pressure condition as aging is not limited, but aging is usually carried out under normal pressure. Variation in pressure accompanies variation of the boiling point of the solvent. Accordingly, volatilization (evaporation) of the solvent being ripening varies the composition ratio, which may lower the stability of the composition and may not be obtained the porous silica with a high water resistance.

In addition, before the film formation step after the aging, the composition of the present invention is preferably diluted through further mixing with an organic solvent. That makes it possible to lower the rate of the sol-gel reaction occurring in the composition of the present invention. Consequently, the pot life of the composition of the present invention can be prolonged.

[5-2. Film Formation Step]

After the preparation step, the film formation step is carried out to form the prepared composition of the present invention into a film. The film formation step usually forms a filmmade of the composition of the present invention on the surface of the predetermined base material.

The method for film formation is not particularly limited, and is exemplified by casting in which the composition of the present invention is spread over the base material with the use of a bar coater, an applicator, a doctor blade or the like; dip coating in which the base material is immersed in the composition of the present invention and removed from the composition; other known methods, such as spin coating, capillary coating, die coating, and spray coating. Among these examples, casting, die coating, spray coating, and spin coating are preferable because these methods can uniformly apply the composition of the present invention. Above all, for formation of a homogeneous film, spin coating, dip coating, and spray coating are particularly preferable.

In forming the composition of the present invention into a film through casting, the casting speed is not limited, but is usually 0.1 m/minute or higher, preferably 0.5 m/minute or higher, more preferably 1 m/minute or higher, and is usually 1000 m/minute or lower, preferably 700 m/minute or lower, preferably 500 m/minute or lower. An excessively low casting speed may cause the resultant film to have an uneven thickness while an excessive high casting speed may make it difficult to regulate wettability between the base material and the coating solution.

In dip coating, the base material is immersed into and removed from coating solution at any speeds. The removal speed is not limited, but is usually 0.01 mm/sec or higher, preferably 0.05 mm/sec or higher, more preferably 0.1 mm/sec or higher, and is usually 50 mm/sec or lower, preferably 30 mm/sec or lower, more preferably 20 mm/sec or lower. An excessively low or high removal speed may cause the film to have an uneven thickness. In the meantime, the immersion speed of the base material into the coating solution is not limited, but is preferably similar to the removal speed. Further, the immersion may be continued for an appropriate time period from starting immersion of the base material into the coating solution to removal of the base material. The immersion continuing time period is not limited, but is usually 1 second or longer, preferably 3 seconds or longer, more preferably 5 seconds or longer, and is usually 48 hours or shorter, preferably 24 hours or shorter, more preferably 12 hours or shorter. An excessively short immersion time period may cause the film to have a low cohesion to the base material while an excessively long immersion time period may form the film during the immersion so that the film may be poor in smoothness.

In forming the film formed of the composition of the present invention through spin coating, the revolution speed is usually 10 round/minute or longer, preferably 50 round/minute or higher, more preferably 100 round/minute or higher, and is usually 100,000 round/minute or lower , preferably 50,000 round/minute or lower, more preferably 10,000 round/minute or lower. An excessively low revolution speed may cause the resultant film to have an uneven thickness while an excessively high revolution speed may cause the solvent to easily evaporate, so that reactions such as hydrolysis of alkoxysilanes may not sufficiently proceed, resulting in a low water resistance.

In forming the composition of the present invention through application by spray coating, the type of spray nozzle is not particularly limited and may be selected considering advantages of each spray nozzle. Typical examples are a two-fluid spray nozzle (two-fluid spray type), an ultrasonic spray nozzle (an ultrasonic spray type), and a rotary spray nozzle (a rotary spray type). On the point of capability of independently controlling atomization of the composition from controlling of transferring atomized particles to the base material via gas flow, an ultrasonic spray nozzle and a rotary spray nozzle are preferable, and on the point of maintaining the liquidity of the composition, a two-fluid spray nozzle is preferable.

Further, the flowing speed of gas flow used in transferring atomized particles is preferably adjusted depending on the composition to be used, but is usually 5 m/sec or low, preferably 4 m/sec or low, more preferably 3 m/sec or low. An excessively high flowing speed may make the resultant film heterogeneous. The gas to be used is not particularly limited, but is preferably an inactive gas, such as nitrogen.

The distance between a spray nozzle and the base material is preferably adjusted depending on the size of the base material, and is usually 5 cm or more, preferably 10 cm or more, more preferably 15 cm or more, and is usually 100 cm or less, preferably 80 cm or less, more preferably 50 cm or less. A distance beyond the above range may result in uneven thickness.

In the film formation step of the production method of the present invention, the film formation is carried out under the condition of the relative humidity being usually 20 % or higher, preferably 25 % or higher, more preferably 30 % or higher, and being usually 85 % or lower, preferably 80 % or lower, more preferably 75 % or lower. A relative humidity in the above range makes the film formation step possible to obtain a film with a high surface smoothness.

The atmosphere in the film formation step is not limited, and may be performed in, for example, the air atmosphere or in an inactive-gas atmosphere, such as argon.

The temperature at which the film formation step is performed is not limited, but is usually 0 °C or higher, preferably 10 °C or higher, more preferably 20 °C or higher, and is usually 100 °C or lower, preferably 80 °C or lower, more preferably 70 °C or lower, still further preferably 60 °C or lower, above all, preferably 50 °C or lower, particularly preferably 40 °C or lower. An excessively low temperature as film formation makes it difficult to evaporate the solvent so that the resultant film may have poor surface smoothness, while an excessively high temperature is rapidly proceeded the condensations of the alkoxysilanes and therefore the resultant film may be largely distorted.

The pressure at which the film forming step is performed is not limited, but is usually 0.05 MPa or higher, preferably 0.08 MPa or higher, more preferably 0.1 MPa or higher, and is usually 0.3 MPa or lower, preferably 0.2 MPa or lower, more preferably 0.15 MPa or lower. An excessively low pressure causes the solvent to easily evaporate so that the absence of leveling effect after the film formation may lower the smoothness of the film, while an excessively high pressure makes it difficult to evaporate the solvent so that the resultant film may have excellent surface properties.

Here, dip coating, spin coating, and spray coating have respective different drying speed, causing minute differences in stable structure of the film immediately after the film formation. The difference can be adjusted by variation in atmosphere in which the film formation is carried out. The minute differences in stable structure of the film can also be dealt by surface processing on the base material.

Prior to forming the composition of the present invention into a film disposed on the base material, surface processing may be performed on the base material for the wettability of the composition of the present invention and the cohesion of porous silica. Examples of such surface processing are additions of silane coupling agents, corona treatment, and UV ozone treatment. The surface processing to be carried out may be a single kind or may be in any combination of two or more.

The film formation processing may be called out all at the same time or may be carried out two or more separate times. For example, the film formation step performed in two or more times interposed by a heating step to be detailed below can produce porous silica having a layered structure. This manner is useful when layers having respective different refractive indexes would be deposited.

[5-3. Heating Step]

After the film formation step, a heating process is carried out in which the film formed of the composition of the present invention is heated. The heating step dries and removes the organic solvent and water contained in the composition of the present invention, which is cured the film and thereby formed into the porous silica of the present invention.

The manner of the heating processing is not particularly limited, and is exemplified by baking in a baking furnace in which the base material is placed and the film formed of the composition of the present invention is heated; hot-plate manner in which the base material is placed on a hot plate and the film formed of the composition of the present invention is heated through the plate; and a manner in which heaters are arranged over and/or under the base material to irradiate the base material with electromagnetic waves (e.g., infrared rays) so that the film formed of the composition of the present invention is heated.

The heating temperature is not limited and can be any value as long as the film formed of the composition of the present invention can be cured. The temperature is usually 230 °C or higher, preferably 300 °C or higher, more preferably 320 °C or higher, still further preferably 350 °C or higher, and is usually 700 °C or lower, preferably 500 °C or lower, more preferably 450 °C or lower. An excessively low heating temperature may cause the resultant film (i.e., the porous silica of the present invention) to have a refractive index without lowering and be colored. In the meantime, an excessively high heating temperature may lower the cohesion of the porous silica of the present invention to the base material. In the heating step, the heating may be continuously carried out at the above heating temperature or may be continually carried out at the above temperature.

The heating can be carried out at any temperature rising speed unless significantly impairing the effects of the present invention. However the temperature is risen at usually 1 °C/minute or higher, preferably 10 °C/minute or higher, and is usually 500 °C/minute or lower, preferably 300 °C/minute or lower. An excessively low temperature rising speed may cause the resultant film to be dense so that a large distortion of the film may lower the water resistance while an excessively high temperature rising speed may cause the resultant film to have a large distortion and thereby have a low water resistance.

The heating can be carried out for any time period unless significantly impairing the effects of the present invention. However the heating time period is usually 30 seconds or longer, preferably 1 minute or longer, more preferably 2 minutes or longer, and is usually 5 hours or shorter, preferably 2 hours or shorter, more preferably 1 hour or shorter. An excessively short heating period may not sufficiently remove the non-ionic polymer while an excessively long heating time period may accelerate the reaction of the alkoxysilanes, thereby lowering the cohesion to the substrate.

The heating can be carried out under any pressure unless significantly impairing the effects of the present invention, which pressure is preferably in a decompression environment because predominantly proceeding evaporation of the solvent over the reaction of the alkoxysilanes may cause the resultant film to have a low water resistance. From the above viewpoints, the pressure in the heating step is set to be usually 0.2 MPa or lower, preferably 0.15 MPa or lower, more preferably 0.1 MPa or lower. The lower limit of the pressure is not particularly limited, but is usually $10^{-4}$ MPa or higher, preferably $10^{-3}$ MPa or higher, more preferably $10^{-2}$ MPa or higher. An excessively low pressure makes evaporation of the solvent override the reaction of alkoxysilanes so that the resultant film may have a poor water resistace.

The heating is carried out in any atmosphere unless significantly impairing the effects of the present invention. A preferable environment is one that hardly generates unevenness due to drying. Above all, the heating is carried out under the ambient atmosphere. Alternatively, it is also possible to place the film formed of the composition in inert gas and dry under inert atmosphere.

Through the above heating process, the film formed of the composition of the present invention is cured to thereby obtain the porous silica of the present invention. The film is usually formed on the surface of the base material, and accordingly, the production method of the present invention can produce the optical-purpose layered products of the present invention.

[5-4. Cooling Step]

After the heating step, a cooling step may be carried out according to the requirement. The cooling step cools the porous silica of the present invention, which has been heated to a high temperature through the heating step. The cooling step can be carried out at any cooling rate unless significantly impairing the effects of the present invention. The cooling rate is usually 0.1 °C/minute or higher , preferably 0. 5 °C/minute or higher, more preferably 0.8 °C/minute or higher, still further preferably 1 °C/minute or higher , and is usually 100 °C/minute or lower, preferably 50 °C/minute or lower, more preferably 30 °C/minute or lower, still further preferably 20 °C/minute or lower. An excessively low cooling rate may raise the production cost while an excessively high cooling rate has a possibility that the resultant film has poor quality due to difference in thermal expansion between adjacent layers.

The cooling step can be carried out under any atmosphere unless significantly impairing the effects of the present invention. Examples of the atmosphere are a vacuum environment and an inactive-gas environment. Further, the temperature and the humidity are not limited, but the cooling is usually carried out at normal temperature and normal humidity.

[5-5. Postprocessing Step]

After the heating process, a postprocessing step can be carried out according to the requirement. The specific procedure performed in the postprocessing step is not limited, but is exemplified by processing on the obtained porous silica with the use of a silylation agent so that the surface of the porous silica of the present invention can have a surface better in functionality. In detail,treatment with a silylization agent provides hydrophobicity to the porous silica of the present invention, the pores of which can keep away from being polluted with impurities such as alkaline water.

Examples of a silylization agent is alkoxysilanes, such as trimethylmethoxysilane, trimethylethoxysilane, dimethyldimethoxysilane, dimethyldiethoxysilane, methyltrimethoxysilane, methyltriethoxysilane, dimethylethoxysilane, methyldiethoxysilane, dimethylvinylmethoxysilane, dimethylvinylethoxysilane, diphenyldimethoxysilane, diphenyldiethoxysilane, phenyltrimethoxysilane, and phenyltriethoxysilane; chlorosilanes, such as trimethylchlorosilane, dimethyldichlorosilane, methyltrichlorosilane, methyldichlorosilane, dimethylchlorosilane, dimethylvinylchlorosilane, methylvinyldichlorosilane, methylchlorodisilane, triphenylchlorosilane, methyldiphenylchlorosilane, and diphenyldichlorosilane; silazanes, such as hexamethyldisilazane, N,N'-bis(trimethylsilyl)urea, N-trimethylsilylacetamide, dimethyltrimethylsilylamine, diethyltriethylsilylamine, and trimethylsilylimidazole; and alkoxysilanes having an alkyl fluoride group or an aryl fluoride group, such as (3,3,3-trifluoropropyl)trimethoxysilane, (3,3,3-trifluoropropyl)triethoxysilane, pentafluorophenyltrimethoxysilane, and pentafluorophenyltriethoxysilane.

These silylization agents may be used alone or in any combination of two or more at any ratio.

The specific procedure of the silylization is to apply a silylization agent to the porous silica, immerse porous silica into a silylization agent, or expose the porous silica to the vapor of a silylization agent.

An alternative example of the postprocessing is aging the porous silica of the present invention under a condition of high humidity to reduce non-reacted silanols contained in the porous structure, further improving the water resistance of porous silica of the present invention.

[5-6. Others]

The production method of the present invention may include any additional step performed before, during and after each of the above steps.

Further, the production method of the present invention forms the porous silica of the present invention into a film shape. However, if the porous silica is formed into another shape, it is sufficient that the film formation step is substituted by a forming step that forms the porous silica into a predetermined shape.

[5-7. Advantages]

The production method of the present invention can produce the porous silica of the present invention which is low in refractive index and superior in water resistance. In addition, the production method of the present invention can produce the composition and the optical-purpose layered product of the present invention. In other words, the production method of the present invention can provide porous silica, an optical-purpose layered product, a composition, and an optical-purpose layered product containing the composition all of which stably maintains the optical properties of low refractive index. In particular, the porous silica produced is superior in water resistance and can be used under outdoor exposures.

Examples

Hereinafter, the present invention will be further detailed with reference to Examples, but the present invention should by no means be limited to the following Examples and can be arbitrarily modified without departing from the gist of the present invention.

[Example 1]

[Preparation of Composition]

19.6 g of tetraethoxysilane, 19.2 g of methyltriethoxysilane, 9 g of ethanol (boiling point 78.3 °C), 13.9 g of water, and 32.9 g of 0.3 wt% hydrochloric acid solution were mixed and were stirred in a water bath of 63 °C for 30 minutes and further at room temperature for another 30 minutes to thereby prepare Mixture (A).

Next, to Mixture (B) containing 14.9 g of (polyethylene oxide)-(polypropylene oxide)-(polyethylene oxide) triblockpolymer (PLURONIC P123 (weight-average molecular weight 5,650, the ratio of the ethylene oxide moiety 30 wt%) produced by BASF Ltd.; hereinafter appropriately called "P123") and 12 g of ethanol, above Mixture (A) was further added and then the two mixture were stirred at room temperature for 60 minutes to thereby prepare Mixture (C).

10 ml of Mixture (C) and 9 ml of diluent solution of 1-butanol (boiling point 117.3 °C) were mixed and stirred at room temperature for 30 minutes to thereby obtain a composition.

In the obtained composition, ratios of silicon atoms derived from tetraethoxysilane, water, and P123 to silicon atoms derived from the entire alkoxysilanes (tetraethoxysilane and methyltriethoxysilane) were 0.47, 12.9, and 0.013 (mol/mol), respectively.

[Production of Porous Silica]

The obtained composition was filtered through a filter of pore size 0.45 $\mu$m, and then 2 ml of the filtrate was dropped onto a glass base material (the center line average roughness=0. 01$\mu$m, the maximum height Rmax of the surface roughness=0.13$\mu$m) in the form of a 75 mm square. Then, the base material was rotated at 500 rpm for 2 minutes by a spin coater produced by MIKASA Co., Ltd. so that a film was produced. At that time, the relative humidity was 45 %.

Next, the film was placed on a hot plate set to be 440 °C and heated for 2 minutes under ambient atmosphere. Consequently, porous silica having preferable appearance was obtained.

[XRD Measurement]

An XRD measurement is carried out on the obtained porous silica, resulting in that no diffraction peak was measured in the diffraction angle (2$\theta$) region of from 0.5° to 10°.

[Measurement of Refractive Index and Film Thickness]

Measurement with a spectroscopic ellipsometer and analysis with the fitting of the Cauthy model resulted in that the obtained porous silica had a refractive index of 1.14 at wavelength 550 nm and a film thickness of 0.69 $\mu$m.

[Measurement of Arithmetic Surface Roughness]

An average value of three times of measurement with a contact-type surface roughness meter under conditions of one scanning length of 0.50 $\mu$m was calculated. As the result of the measurement, the arithmetic surface roughness Ra of the obtained porous silica was 1.3 nm.

[Refractive Index Difference caused from water immersion]

The obtained porous silica was immersed into a 1L beaker charged with desalted water, and left under condition of water temperature of 23 °C. After 24 hours, the porous silica was removed, and dried by compressed air. The refractive index after the water immersion was measured in the same manner as the above and was measured to be 1.14 at a wavelength 550 nm. The difference of the refractive index between before and after the immersion was 0. In addition, the porous silica after the immersion exhibited no change in appearance, so that the measurement concluded that the porous silica was superior in water resistance.

[Measurement of Static Contact Angle with Water]

The obtained porous silica was heated on a hot plate set to be at 350 °C for 1 hour and cooled in the environment of normal temperature and normal humidity. Then, the static contact angle was measured. As the result of dropping desalted water on the surface of the porous silica, the static contact angle thereof was 75°.

[Measurement of Entire Light Transmittance of C light]

The entire light transmittance of a glass base material on which the porous silica was deposited was measured with a haze meter and resulted to be 93.0 %.

[Example 2]

Porous silica was produced in the same manner as the production of Example 1 except that methyltrimethoxysilane was substituted for methyltriethoxysilane, and was evaluated, the result of which is shown in Table 1.

[Example 3]

Porous silica was produced in the same manner as the production of Example 1 except that the ratio of the non-ionic polymer to silicon atoms derived from the entire alkoxysilanes (tetraethoxysilane and methyltriethoxysilane) was 0.006 (mol/mol), and was evaluated, the result of which is shown in Table 1.

[Example 4]

Porous silica was produced in the same manner as the production of Example 1 except that the non-ionic polymer to silicon atoms derived from the entire alkoxysilanes (tetraethoxysilane and methyltriethoxysilane) was 0.009 (mol/mol), and was evaluated, the result of which is shown in Table 1.

[Example 5]

Porous silica was produced in the same manner as the production of Example 1 except that the non-ionic polymer to silicon atoms derived from the entire alkoxysilanes (tetraethoxysilane and methyltriethoxysilane) was 0.022 (mol/mol), and was evaluated, the result of which is shown in Table 1.

[Comparative Example 1]

[Preparation of Composition]

20.8 g of tetraethoxysilane, 11.5 g of ethanol, 0.36 g of hydrochloric acid, 45 g of water, and 7.5 g of (polyethylene oxide)-(polypropylene oxide)-(polyethylene oxide) triblockpolymer (PLURONIC F127 (weight-average molecular weight 11,500, the ratio of the ethylene oxide moiety 70 wt%) produced by BASF Ltd.; hereinafter appropriately called "F127") were mixed and stirred to thereby obtain a composition.

In the obtained composition, ratios of silicon atoms derived from tetraethoxysilane, water, and F127 to silicon atoms derived from the entire alkoxysilanes (tetraethoxysilane and other alkoxysilanes) were 1.25 and 0.007 (mol/mol), respectively. In this Comparative Example, the ratio of silicon atoms derived from tetraethoxysilane to silicon atoms derived from the entire alkoxysilanes is higher than 0.7.

[Production of Porous Silica]

The obtained composition was rotated on the same glass base material as that used in Example 1 at 4,000 rpm for 1 minute by a spin coater, so that a film was produced. At that time, the relative humidity was 53 %.

In a sealed container, the obtained film was treated with vapor of trimethylethoxysilane of 150 °C for 4 hours. Then, the film was heated in a furnace set to be 400 °C for 5 hours and thereby porous silica was obtained, which was further treated with vapor of trimethylethoxysilane of 150 °C for 4 hours in a sealed container. Consequently, transparent porous silica was produced.

The porous silica produced in the above method was evaluated in the same manner as performed in Example 1, and the result of the evaluation is shown in Table 1.

[Comparative Example 2]

[Preparation of Composition]

4.2 g of tetraethoxysilane, 2.7 g of methylethoxysilane, 5. 54 g of ethanol (boiling point 78.3 °C), 0.54 g of water, and 0.21 g of 0.036 wt% hydrochloric acid solution were mixed and were stirred in a water bath of 63 °C for 90 minutes to thereby prepare Mixture (A).

Next, to the mixture (B) obtained through mixing and stirring 2.76 g of F127, 12.9 g of ethanol, 1.30 g of water, and 1.59 g of 0.036 wt% hydrochloric acid solution, the above Mixture (A) was added and the mixtures was stirred at room temperature for 3 days to thereby obtain a composition.

In the obtained composition, ratios of silicon atoms derived from tetraethoxysilane, water, and F127 to silicon atoms derived from the entire alkoxysilanes (tetraethoxysilane and other alkoxysilanes) were 0.5, 5, and 0.006 (mol/mol), respectively. In this Comparative Example, the ratio of water to silicon atoms derived from the entire alkoxysilanes is lower than 10.

[Production of Porous Silica]

The obtained composition was filtered through a filter of pore size 0.2 μm, and then 2 ml of the filtrate was dropped onto a glass base material in the form of 75 mm square, same as that used in Example 1. Then, the base material was rotated at 1000 rpm for 1 minute by a spin coater produced by MIKASA Co. , Ltd. so that a film was produced. At that time, the relative humidity was 45 %.

Next, the film was placed on a hot plate set to be at 130 °C and heated for 10 minutes, and then placed on a hot plate set to be at 400 °C and heated for 1 hour, so that transparent porous silica was obtained.

The porous silica produced in the above method was evaluated in the same manner as performed in Example 1, and the result of the evaluation is shown in Table 1.

[Summary of Examples 1-5, and Comparative Examples 1 and 2]

Table 1 below collectively shows physical properties of porous silica varying with the content on the non-ionic polymer P123.

[Table 1]

[Table 1]

| | Non-Ionic Polymer | Non-Ionic Polymer/Si | Diffraction Peak | Refractive Index | Ra (nm) | Film Thickness (μm) | Water Resistance |
|---|---|---|---|---|---|---|---|
| Example 1 | P123 | 0.013 | None | 1.14 | 1.3 | 0.69 | Fine |
| Example 2 | P123 | 0.013 | None | 1.17 | 1.0 | 0.84 | Fine |
| Example 3 | P123 | 0.006 | None | 1.24 | 5.5 | 0.78 | Fine |
| Example 4 | P123 | 0.009 | None | 1.20 | 0.9 | 0.73 | Fine |
| Example 5 | P123 | 0.022 | None | 1.12 | 1.1 | 1.01 | Fine |
| Comparative Example 1 | P127 | 0.007 | 0.8° | 1.28 | 3.9 | 0.85 | Crack |

(continued)

|  | Non-Ionic Polymer | Non-Ionic Polymer/Si | Diffraction Peak | Refractive Index | Ra (nm) | Film Thickness (μm) | Water Resistance |
|---|---|---|---|---|---|---|---|
| Comparative Example 2 | P127 | 0.006 | 1.0° | 1.20 | 23.2 | 1.11 | Crack |

In Table 1, values in the field of Non-Ionic Polymer /Si represent ratios (mol/mol) of the non-ionic polymer to the silicon atoms derived from the entire alkoxysilanes.

Values in the field of Diffraction Peak represent diffraction angles at which diffraction peaks having intensities of twice the standard deviation or more appear.

"Fine" in the field of Water Resistance represents the difference of a refractive index measured according to [Refractive Index Difference caused from water immersion] being 0.05 or less. Further, "Crack" in the same field of Water Resistance means that a crack appears during the evaluation of [Refractive Index Difference caused from water immersion].

Table 1 determines that satisfaction of above Conditions (1) and (2) can realize porous silica superior in water resistance.

[Example 6]

Porous silica was produced in the same manner as the production of Example 1 except that the ratio of the non-ionic polymer to silicon atoms derived from the entire alkoxysilanes (tetraethoxysilane and methyltriethoxysilane) was 0.012 (mol/mol), and was evaluated, the result of which is shown in Table 2.

[Summary of Examples 1-6, and Comparative Examples 1 and 2]

Table 2 below collectively shows relationship between a static contact angle and a water resistance of porous silica.

[Table 2]

[Table 2]

|  | Non-Ionic Polymer | Non-Ionic Polymer/Si | Refractive Index | Contact Angle 2θ (°) | Water Resistance* | Ra (nm) | Film Thickness (μm) |
|---|---|---|---|---|---|---|---|
| Example 1 | P123 | 0.013 | 1.14 | 75 | Fine | 1.3 | 0.69 |
| Example 2 | P123 | 0.013 | 1.17 | <90 | Fine | 1.0 | 0.84 |
| Example 3 | P123 | 0.006 | 1.24 | 40 | Fine | 5.5 | 0.78 |
| Example 4 | P123 | 0.009 | 1.20 | 46 | Fine | 0.9 | 0.73 |
| Example 6 | P123 | 0.012 | 1.18 | 58 | Fine | 1.2 | 0.96 |
| Comparative Example 1 | P127 | 0.007 | 1.28 | >100 | Crack | 3.9 | 0.85 |
| Comparative Example 2 | P127 | 0.006 | 1.20 | Unmeasurable | Crack | 23.2 | 1.11 |

*The water resistance here was measured through a severer water resistance test in which porous silica was immersed in a beaker charged with desalted water, and ultrasonic wave was applied to the porous silica for 10 minutes, and then the porous silica was dried.

In Table 2, values in the field of Non-Ionic Polymer /Si represent a ratio (mol/mol) of the non-ionic polymer to the silicon atoms derived from the entire alkoxysilanes.

"Fine" in the field of Water Resistance represents the difference of a refractive index measured according to [Refractive Index Difference caused from water immersion] being 0.05 or less.

The result determines that contact angle of 25° to 90° can attain an excellent water resistance.

[Example 7]

Porous silica was produced in the same manner as the production of Example 1 except that the non-ionic polymer P123 was substituted by (polyethylene oxide)-(polypropylene oxide)-(polyethylene oxide) triblockpolymer (PLURONIC P85 (weight-average molecular weight 4,600, the ratio of the ethylene oxide moiety 50 wt%) produced by BASF Ltd.; hereinafter appropriately called "P85") that was added and that the ratio of the non-ionic polymer to the silicon atoms derived from the entire alkoxysilanes was 0.016 (mol/mol). The produced porous silica was evaluated, the result of which is shown in Table 3.

[Example 8]

Porous silica was produced in the same manner as the production of Example 1 except that the non-ionic polymer P123 was substituted by (polyethylene oxide)-(polypropylene oxide)-(polyethylene oxide) triblock polymer (PLURONIC P103 (weight-average molecular weight 4,900, the ratio of the ethylene oxide moiety 30 wt%) produced by BASF Ltd.; hereinafter appropriately called "P103") that was added and that the ratio of the non-ionic polymer to the silicon atoms derived from the entire alkoxysilanes was 0.015 (mol/mol). The produced porous silica was evaluated, the result of which is shown in Table 3.

[Example 9]

Porous silica was produced in the same manner as the production of Example 1 except that the non-ionic polymer P123 was substituted by polyethylene glycol (weight-average molecular weight 6, 000, the ratio of the ethylene oxide moiety 100 wt%) that was added and that the ratio of the non-ionic polymer to the silicon atoms derived from the entire alkoxysilanes was 0. 012 (mol/mol). The produced porous silica was evaluated, the result of which is shown in Table 3.

[Example 10]

Porous silica was produced in the same manner as the production of Example 1 except that the non-ionic polymer P123 was substituted by (polyethylene oxide)-(polypropylene oxide)-(polyethylene oxide) triblock polymer (PLURONIC P105 (weight-average molecular weight 6,350, the ratio of the ethylene oxide moiety 50 wt%) produced by BASF Ltd.; hereinafter appropriately called "P105") that was added and that the ratio of the non-ionic polymer to the silicon atoms derived from the entire alkoxysilanes was 0.012 (mol/mol). The produced porous silica was evaluated, the result of which is shown in Table 3.

[Example 11]

Porous silica was produced in the same manner as the production of Example 1 except that the non-ionic polymer P123 was substituted by (polyethylene oxide)-(polypropylene oxide)-(polyethylene oxide triblock polymer (PLURONIC P188 (weight-average molecular weight 10, 800, the ratio of the ethylene oxide moiety 20 wt%) produced by BASF Ltd.; hereinafter appropriately called "P188") that was added and that the ratio of the non-ionic polymer to the silicon atoms derived from the entire alkoxysilanes was 0.007 (mol/mol). The produced porous silica was evaluated, the result of which is shown in Table 3.

[Example 12]

Porous silica was produced in the same manner as the production of Example 1 except that the non-ionic polymer P123 was substituted by F127 that was added and that the ratio of the non-ionic polymer to the silicon atoms derived from the entire alkoxysilanes was 0.006 (mol/mol). The produced porous silica was evaluated, the result of which is shown in Table 3.

[Example 13]

Porous silica was produced in the same manner as the production of Example 1 except that the non-ionic polymer P123 was substituted by (polyethylene oxide)-(polypropylene oxide)-(polyethylene oxide) triblock polymer (PLURONIC F108 (weight-average molecular weight 15,500, the ratio of the ethylene oxide moiety 80 wt%) produced by BASF Ltd.; hereinafter appropriately called "F108") that was added and that the ratio of the non-ionic polymer to the silicon atoms derived from the entire alkoxysilanes was 0.005 (mol/mol). The produced porous silica was evaluated, the result of which is shown in Table 3.

[Comparative Example 3]

Porous silica was produced in the same manner as the production of Example 1 except that the non-ionic polymer P123 was substituted by polyethylene glycol (weight-average molecular weight 4, 000, the ratio of the ethylene oxide moiety 100 wt%) that was added and that the ratio of the non-ionic polymer to the silicon atoms derived from the entire alkoxysilanes was 0.018 (mol/mol). The produced porous silica was evaluated, the result of which is shown in Table 3.

[Comparative Example 4]

Porous silica was produced in the same manner as the production of Example 1 except that the non-ionic polymer P123 was substituted by (polyethylene oxide)-(polypropylene oxide)-(polyethylene oxide) triblock polymer (PLURONIC L101 (weight-average molecular weight 3,800, the ratio of the ethylene oxide moiety 10 wt%) produced by BASF Ltd.; hereinafter appropriately called "L101") that was added and that the ratio of the non-ionic polymer to the silicon atoms derived from the entire alkoxysilanes was 0.019 (mol/mol). The produced porous silica was evaluated, the result of which is shown in Table 3.

[Comparative Example 5]

Porous silica was produced in the same manner as the production of Example 1 except that the non-ionic polymer P123 was substituted by (polyethylene oxide)-(polypropylene oxide)-(polyethylene oxide) triblockpolymer (PLURONICP65 (weight-average molecular weight 3,500, the ratio of the ethylene oxide moiety 50 wt%) produced by BASF Ltd.; hereinafter appropriately called "P65") that was added and that the ratio of the non-ionic polymer to the silicon atoms derived from the entire alkoxysilanes was 0.021 (mol/mol). The produced porous silica was evaluated, the result of which is shown in Table 3.

[Comparative Example 6]

Porous silica was produced in the same manner as the production of Example 1 except that the non-ionic polymer P123 was substituted by (polyethylene oxide)-(polypropylene oxide)-(polyethylene oxide) triblock polymer(PLURONIC L61(weight-averagemolecular weight 2,000, the ratio of the ethylene oxide moiety 10 wt%) produced by BASF Ltd.; hereinafter appropriately called "L61") that was added and that the ratio of the non-ionic polymer to the silicon atoms derived from the entire alkoxysilanes was 0.037 (mol/mol). The produced porous silica was evaluated, the result of which is shown in Table 3.

[Comparative Example 7]

Porous silica was produced in the same manner as the production of Example 1 except that the non-ionic polymer P123 was substituted by polyethylene glycol (weight-average molecular weight 2, 000, the ratio of the ethylene oxide moiety 100 wt%) that was added and that the ratio of the non-ionic polymer to the silicon atoms derived from the entire alkoxysilanes was 0.037 (mol/mol). The produced porous silica was evaluated, the result of which is shown in Table 3. The weight-average molecular weight of the non-ionic polymer used here is lower than 4,300.

[Comparative Example 8]

Porous silica was produced in the same manner as the production of Example 1 except that the non-ionic polymer P123 was substituted by (polyethylene oxide)-(polypropylene oxide)-(polyethylene oxide) triblockpolymer (PLURONICL34 (weight-averagemolecular weight 1,900, the ratio of the ethylene oxide moiety 40 wt%) produced by BASF Ltd.; hereinafter appropriately called "L34") that was added and that the ratio of the non-ionic polymer to the silicon atoms derived from the entire alkoxysilanes was 0.039 (mol/mol). The produced porous silica was evaluated, the result of which is shown in Table 3. The weight-average molecular weight of the non-ionic polymer used here is lower than 4,300.

[Comparative Example 9]

Porous silica was produced in the same manner as the production of Example 1 except that the non-ionic polymer P123 was substituted by polyethylene glycol (weight-average molecular weight 1,000, the ratio of the ethylene oxide moiety 100 wt%) that was added and that the ratio of the non-ionic polymer to the silicon atoms derived from the entire alkoxysilanes was 0.074 (mol/mol). The produced porous silica was evaluated, the result of which is shown in Table 3. The weight-average molecular weight of the non-ionic polymer used here is lower than 4,300.

[Summary of Examples 1-13, and Comparative Examples 1-9]

Table 3 below collectively shows effects caused from.lowering refractive indexes varied with kinds and contents of non-ionic polymer with an ethylene oxide moiety.
[Table 3]

[Table 3]

| | TEOS/Si | H$_2$O/Si | Non-Ionic Polymer, | Weight-Average Molecular Weight of Non-Ionic Polymer | Non-Ionic Polymer /Si | Refractive Index | Water Resistance | Diffraction Peak | Ra (nm) | Film Thickness (μm) | Film Formability |
|---|---|---|---|---|---|---|---|---|---|---|---|
| Example 1 | 0.47 | 12.9 | P123 | 5650 | 0.013 | 1.14 | Fine | None | 1.3 | 0.69 | Fine |
| Example 2 | 0.47 | 12.9 | P123 | 5650 | 0.013 | 1.17 | Fine | None | 1.0 | 0.84 | Fine |
| Example 3 | 0.47 | 12.9 | P123 | 5650 | 0.006 | 1.24 | Fine | None | 5.5 | 0.78 | Fine |
| Example 4 | 0.47 | 12.9 | P123 | 5650 | 0.009 | 1.20 | Fine | None | 0.9 | 0.73 | Fine |
| Example 5 | 0.47 | 12.9 | P123 | 5650 | 0.022 | 1.12 | Fine | None | 1.1 | 1.01 | Fine |
| Example 6 | 0.47 | 12.9 | P123 | 5650 | 0.012 | 1.18 | Fine | None | 1.2 | 0.96 | Fine |
| Example 7 | 0.47 | 12.9 | P85 | 4600 | 0.016 | 1.18 | Fine | * | 12.9 | 0.89 | Fine |
| Example 8 | 0.47 | 12.9 | P103 | 4900 | 0.015 | 1.17 | Fine | * | <20 | 1.39 | Fine |
| Example 9 | 0.47 | 12.9 | PEG | 6000 | 0.012 | 1.25 | Fine | * | 0.9 | 1.24 | Fine |
| Example 10 | 0.47 | 12.9 | P105 | 6350 | 0.012 | 1.18 | Fine | * | <20 | 1.44 | Fine |
| Example 11 | 0.47 | 12.9 | P18.8 | 10800 | 0.007 | 1.18 | Fine | * | 8.5 | 0.79 | Fine |
| Example 12 | 0.47 | 12.9 | F127 | 11500 | 0.006 | 1.15 | Fine | * | <20 | 1.86 | Fine |
| Example 13 | 0.47 | 12.9 | F108 | 15500 | 0.005 | 1.18 | Fine | * | 9.1 | 0.91 | Fine |
| Comparative Example 1 | 1.0 | 25.0 | F127 | 11500 | 0.007 | 1.28 | Crack | 0.8° | 3.9 | 0.85 | Fine |
| Comparative Example 2 | 0.5 | 5.0 | F127 | 1.1500 | 0.006 | 1.20 | Crack | 1.0° | 23.2 | 1.11 | Fine |
| Comparative Example 3 | 0.47 | 12.9 | PEG | 4000 | 0.018 | 1.38 | Fine | * | <20 | 0.48 | Fine |
| Comparative Example 4 | 0.47 | 12.9 | L101 | 3800 | 0.019 | Opaque | Poor | Unmeasurable | Hetero-geneous | Hetero-geneous | Poor |
| Comparative Example 5 | 0.47 | 12.9 | P65 | 3500 | 0.021 | 1.36 | Fine | * | 4.5 | 0.34 | Fine |

| | TEOS/Si | H$_2$O/Si | Non-Ionic Polymer, | Weight-Average Molecular Weight of Non-Ionic Polymer | Non-Ionic Polymer /Si | Refractive Index | Water Resistance | Diffraction Peak | Ra (nm) | Film Thickness ($\mu$m) | Film Formability |
|---|---|---|---|---|---|---|---|---|---|---|---|
| Comparative Example 6 | 0.47 | 12.9 | L61 | 2000 | 0.037 | 1.38 | Fine | * | 6.9 | 0.29 | Fine |
| Comparative Example 7 | 0.47 | 12.9 | PEG | 2000 | 0.037 | 1.38 | Fine | * | <20 | 0.41 | Fine |
| Comparative Example 8 | 0.47 | 12.9 | L34 | 1900 | 0.039 | 1.40 | Fine | * | 8.6 | 0.30 | Fine |
| Comparative Example 9 | 0.47 | 12.9 | PEG | 1000 | 0.074 | 1.38 | Fine | * | 26.4 | 0.29 | Fine |

In Table 3, the symbol "*" in the field of Diffraction Peak means that measurement of the diffraction peak was not performed on the corresponding porous silica. However, porous silica of Examples 7-13 is estimated to have no diffraction peak because of the usage of non-organic polymer.

In Table 3, values in the field of TEOS /Si represent ratios (mol/mol) of the silicon atoms derived from tetraethoxysilane to the silicon atoms derived from the entire alkoxysilanes.

Values in the field of $H_2O/Si$ represent ratios (mol/mol) of water to the silicon atoms derived from the entire alkoxysilanes.

In addition, values in the field of Non-Ionic Polymer/Si represent ratios (mol/mol) of non-ionic polymer to the silicon atoms derived from the entire alkoxysilanes.

"Fine" in the field of Water Resistance represents the difference of a refractive index measured according to [Refractive Index Difference caused from water immersion] being 0.05 or less. Further, "Crack" in the same field of Water Resistance means that a crack appears during the evaluation of [Refractive Index Difference caused from water immersion].

In Table 3, "Fine" in the field of Film Formability represents possession of transparency and mirror surface observed visually; "Gelation" means that the composition has gelled; and "Poor" represents opacity.

Table 3 shows that a non-ionic polymer having a weight-average molecular weight of 4,300 or more causes the resultant porous silica to have a refractive index of 1.3 or lower.

[Example 14]

Porous silica was produced in the same manner as the production of Example 1 except that ethylacetate (the boiling point 76.8 °C) was used as the dilution solution, and was evaluated, the result of which is shown in Table 4.

[Example 15]

Porous silica was produced in the same manner as the production of Example 1 except that ethanol (the boiling point 78.7 °C) was used as the dilution solution, and was evaluated, the result of which is shown in Table 4.

[Example 16]

Porous silica was produced in the same manner as the production of Example 1 except that 2-propanol (the boiling point 83 °C) was used as the dilution solution, and was evaluated, the result of which is shown in Table 4.

[Example 17]

Porous silica was produced in the same manner as the production of Example 1 except that t-butanol (the boiling point 82.4 °C) was used as the dilution solution, and was evaluated, the result of which is shown in Table 4.

[Example 18]

Porous silica was produced in the same manner as the production of Example 1 except that 1-propanol (the boiling point 97.2 °C) was used as the dilution solution, and was evaluated, the result of which is shown in Table 4.

[Example 19]

Porous silica was produced in the same manner as the production of Example 1 except that 1-pentanol (the boiling point 138.3 °C) was used as the dilution solution, and was evaluated, the result of which is shown in Table 4.

[Comparative Example 10]

Porous silica was produced in the same manner as the production of Example 1 except that mesitylene (the boiling point 165 °C, which is below a boiling point 55 °C) was used as the dilution solution, and was evaluated, the result of which is shown in Table 4.

[Comparative Example 11]

Porous silica was produced in the same manner as the production of Example 1 except that ethylene glycol (the boiling point 198 °C beyond a boiling point 140 °C) was used as the dilution solution, and was evaluated, the result of which is shown in Table 4.

[Comparative Example 12]

Porous silica was produced in the same manner as the production of Example 1 except that N-methyl 2-pyrrolidone (the boiling point 202 °C beyond a boiling point 140 °C) was used as the dilution solution, and was evaluated, the result of which is shown in Table 4.

[Comparative Example 13]

Porous silica was produced in the same manner as the production of Example 1 except that 1,4-butanediol (the boiling point 228 °C beyond a boiling point 140 °C) was used as the dilution solution, and was evaluated, the result of which is shown in Table 4.

[Comparative Example 14]

Porous silica was produced in the same manner as the production of Example 1 except that 2-phenoxyethanol (the boiling point 245 °C beyond a boiling point 140 °C) was used as the dilution solution, and was evaluated, the result of which is shown in Table 4.

[Summary of Examples 1, 14-19, and Comparative Examples 10-14]

Table 4 below collectively shows the result of comparison of film formability of porous silica with respect to two kinds of organic solvent.

[Table 4]

[Table 4]

| | Organic Solvent | Dilution Solvent | Boiling Point of Dilution Solvent (°c) | TEOS/ Si | H$_2$O/Si | Non-Ionic Polymer/Si | Refractive Index | Water Resistance | Diffraction Peak | Ra (nm) | Film Thickness ($\mu$m) | Film Formability |
|---|---|---|---|---|---|---|---|---|---|---|---|---|
| Example 1 | Ethanol | 1-Butanol | 117.3 | 0.47 | 12.9 | 0.013 | 1.14 | Fine | None | 1.3 | 0.69 | Fine |
| Example 14 | Ethanol | Ethylacetate | 76.8 | 0.47 | 12.9 | 0.013 | 1.15 | Fine | * | 6.1 | 1.38 | Fine |
| Example 15 | Ethanol | Ethanol | 78.7 | 0.47 | 12.9 | 0.013 | 1.15 | Fine | * | 3.9 | 1.03 | Fine |
| Example 16 | Ethanol | 2-Propanol | 83 | 0.47 | 12.9 | 0.013 | 1.15 | Fine | * | 2.8 | 1.11 | Fine |
| Example 17 | Ethanol | t-Butanol | 82.4 | 0.47 | 12.9 | 0.013 | 1.15 | Fine | * | 3.3 | 1.31 | Fine |
| Example 18 | Ethanol | 1-Propanol | 97.2 | 0.47 | 12.9 | 0.013 | 1.15 | Fine | * | 1.7 | 0.79 | Fine |
| Example 19 | Ethanol | 1-Pentanol | 138.3 | 0.47 | 12.9 | 0.013 | 1.15 | Fine | * | 1.9 | 0.72 | Fine |
| Comparative Example 10 | Ethanol | Mesitylene | 49 | 0.47 | 12.9 | 0.013 | Unmeasurable | Unmeasurable | Unmeasurable | Unmeasurable | Unmeasurable | Gelation |
| Comparative Example 11 | Ethanol | Ethylene Glycol | 198 | 0.47 | 12.9 | 0.013 | Unmeasurable | Unmeasurable | Unmeasurable | Heterogeneous | Heterogeneous | Poor |
| Comparative Example 12 | Ethanol | N-methyl 2-pyrrolidone | 202 | 0.47 | 12.9 | 0.013 | Unmeasurable | Unmeasurable | Unmeasurable | Heterogeneous | Heterogeneous | Poor |
| Comparative Example 13 | Ethanol | 1,4-Butanediol | 228 | 0.47 | 12.9 | 0.013 | Unmeasurable | Unmeasurable | Unmeasurable | Heterogeneous | Heterogeneous | Poor |
| Comparative Example 14 | Ethanol | 2-Phenoxy-ethanol | 245 | 0.47 | 12.9 | 0.013 | Unmeasurable | Unmeasurable | Unmeasurable | Heterogeneous | Heterogenerous | Poor |

In Table 4, the symbol "*" in the field of Diffraction Peak means that measurement of the diffraction peak was not performed on the corresponding porous silica. However, porous silica of Examples 14-19 is estimated to have no diffraction peak because these Examples are different only in the kind of solvent from the production of Example 1.

In Table 4, values in the field of TEOS /Si represent ratios (mol/mol) of the silicon atoms derived from tetraethoxysilane to the silicon atoms derived from the entire alkoxysilanes.

Values in the field of $H_2O/S$ represent ratios (mol/mol) of water to the silicon atoms derived from the entire alkoxysilanes.

In addition, values in the field of Non-Ionic Polymer/Si represent ratios (mol/mol) of non-ionic polymer to the silicon atoms derived from the entire alkoxysilanes.

"Fine" in the field of Water Resistance represents the difference of a refractive index measured according to [Refractive Index Difference caused from water immersion] being 0.05 or less. Further, "Crack" in the same field of Water Resistance means that a crack appears during the evaluation of [Refractive Index Difference caused from water immersion].

In Table 4, "Fine" in the field of Film Formability represents possession of transparency and mirror surface observed visually; "Gelation" means that the composition has gelled; and "Poor" represents opacity.

Table 4 determines that usage of two kinds of organic solvent having a boiling point of 55-140 °C can make it possible to obtain fine porous silica.

[Example 20]

Transparent porous silica was produced in the same manner as the production of Example 1 except that spin coating was carried out under the environment of the relative humidity of 67 %, and that heating was carried out in the ambient atmosphere with the use of a hot plate set to be at 440 °C for 2 minutes, and was evaluated, the result of which is shown in Table 5.

[Example 21]

Transparent porous silica was produced in the same manner as the production of Example 1 except that spin coating was carried out under the environment of the relative humidity of 55 %, and that heating was carried out in the ambient atmosphere with the use of a hot plate set to be at 130 °C for 10 minutes and then a hot plate set to be at 440 °C for 2 minutes, and was evaluated, the result of which is shown in Table 5.

[Example 22]

Transparent porous silica was produced in the same manner as the production of Example 1 except that spin coating was carried out under the environment of the relative humidity of 55 %, and that heating was carried out in the ambient atmosphere with the use of a hot plate set to be at 90 °C for 1 minute and 30 seconds, a hot plate set to be at 150 °C for 1 minute and 30 seconds, and then a hot plate set to be at 440 °C for 2 minutes, and was evaluated, the result of which is shown in Table 5.

[Example 23]

Transparent porous silica was produced in the same manner as the production of Example 1 except that spin coating was carried out under the environment of the relative humidity of 55 %, and that heating was carried out in the ambient atmosphere with the use of a hot plate set to be at 350 °C for 2 minutes, and was evaluated, the result of which is shown in Table 5.

[Comparative Example 15]

Porous silica was produced in the same manner as the production of Example 1 except that spin coating was carried out under the environment of the relative humidity of 96 %, and that heating was carried out in the ambient atmosphere with the use of a hot plate set to be at 440 °C for 2 minutes, and was evaluated, the result of which is shown in Table 5. In this Comparative Example, the atmosphere during the film formation step exceeded 85 %. The obtained porous silica had a surface with macro-sized unevenness.

[Summary of Examples 1 and 20-23, and Comparative Example 15]

Table 5 below collectively shows a result of comparison of water resistances varying with heating condition.

[Table 5]

[Table 5]

| | Atmosphere as Application | Atmosphere as Heating | Heating Temperature/Time | Refractive Index | Water Resistance | Diffraction Peak | Ra (nm) | Film Thickness (μm) | Film Formability |
|---|---|---|---|---|---|---|---|---|---|
| Example 1 | 45%Rh | Ambient Atmosphere | 440°C/ 2 minutes | 1.14 | Fine | None | 1.3 | 0.69 | Fine |
| Example 20 | 67%Rh | Ambient Atmosphere | 440°C/ 2 minutes | 1.14 | Fine | * | Not Measured | Not Measured | Fine |
| Example 21 | 55%Rh | Ambient Atmosphere | 130°C/ 10 minutes 440°C/ 2 minutes | 1.17 | Fine | * | Not Measured | Not Measured | Fine |
| Example 22 | 55%Rh | Ambient Atmosphere | 90°C/ 1.5 minutes 150°C / 1.5 minutes 440°C/ 2 minutes | 1.16 | Fine | * | 4.9 | 1.06 | Fine |
| Example 23 | 55%Rh | Ambient Atmosphere | 350°C/ 15 minutes | 1.16 | Fine | * | Not Measured | Not Measured | Fine |
| Comparative Example 15 | 96%Rh | Ambient Atmosphere | 440°C/ 2 minutes | Unmeasurable | Unmeasurable | Unmeasurable | Heterogeneous | Heterogeneous | Poor |

**EP 2 130 797 B1**

In Table 5, the symbol "*" in the field of Diffraction Peak means that measurement of the diffraction peak was not performed on the corresponding porous silica. However, porous silica of Examples 20-23 are estimated to have no diffraction peak because these polymers are different only in heating condition from the production of Example 1.

In Table 5, "Fine" in the field of Water Resistance represents the difference of a refractive index measured according to [Refractive Index Difference caused from water immersion] being 0.05 or less. Further, "Uneven Surface" in the same field of Water Resistance represents the presence of macro-size unevenness on the surface.

In Table 5, "Fine" in the field of Film Formability represents possession of transparency and mirror surface observed visually; "Gelation" means that the composition has gelled; and "Poor" represents opacity.

Table 5 determines the film formation performed under the environment of the relative humidity of 20-85 % followed by heating can obtain porous silica superior in water resistance.

[Example 24]

A composition obtained through the same manner as the production of Example 1 except that 10 ml of Mixture (C) of Example 1 and 40 ml of 1-butanol were mixed. The obtained composition was formed into the porous silica in the same manner as performed in Example 1 through the use of a glass base material (center line average roughness=0.8$\mu$m, maximum height of surface roughness=8.6$\mu$m) in the form of a 100 mm square having an uneven surface. The result of evaluation thereon is shown in Table 6. The refractive index and the film thickness are values obtained through reflection spectroscopic measurement.

[Example 25]

A film was produced by spray coating one surface of 50 mm square glass base material (center line average roughness=0.01 $\mu$m, maximum height of surface roughness=0.13 $\mu$m) the other surface of which contains ITO with the composition of Example 24.

Then, the film was heated on a hot plate set to be at 200 °C for 2 minutes and further heated in an oven at 440 °C for 30 minutes. Thereby, porous silica was obtained and the evaluation result thereon is shown in Table 6.

[Table 6]

[Table 6]

|  | Center Line Average Roughness of Base Material ($\mu$m) | Heating Temperature/Time | Refractive Index | Water Resistance | Film Thickness ($\mu$m) | Film Formability |
|---|---|---|---|---|---|---|
| Example 24 | 0.8 | 440°C/ 15 minutes | 1.16 | Fine | 300 | Fine |
| Example 25 | 0.01 | 200°C/ 2 minutes  440°C/ 30 minutes | 1.20 | Fine | 782 | Fine |

In Table 6, "Fine" in the field of Water Resistance represents the difference of a refractive index measured according to [Refractive Index Difference caused from water immersion] being 0.05 or less. Further, "Uneven Surface" in the same field of Water Resistance represents the presence of macro-sized unevenness on the surface.

In Table 6, "Fine" in the field of Film Formability represents possession of transparency and mirror surface observed visually; "Gelation" means that the composition has gelled; and "Poor" represents opacity.

[Industrial Applicability]

The present invention can be applied to any industrial field, for example, any optical purpose. Above all, since the present invention can improve the water resistance as compared with conventional techniques, the present invention can be preferably used outdoors, such as solar cells.

**Claims**

1. Porous silica that meets Condition (1) and Condition (2), where
   Condition (1) represents that the refractive index is 1.3 or lower; and

Condition (2) represents that the difference of the refractive index at a wavelength of 550 nm between before the immersion into water and after the immersion into water for 24 hours is 0.15 or lower; and
wherein the static contact angle with water after a heating process at 350 °C for 1 hour is 25°-90°.

2. Porous silica according to claim 1, wherein the XRD pattern does not have a diffraction peak the intensity of which is twice a standard deviation or higher in a region of the diffraction angle (2θ)=0.5° through 10°.

3. Porous silica according to claim 1 or 2, wherein the arithmetic surface roughness Ra is 20 nm or less.

4. Porous silica according to any one of claims 1-3, wherein the porous silica is a low-reflective layer.

5. An optical-purpose layered product, comprising:

   a base material;
   porous silica defined in any one of claims 1-4 formed over the base material.

6. An optical-purpose layered product according to claim 5, wherein the porous silica is formed over the base material which has a center line average roughness of 0.1 $\mu$m to 15 $\mu$m and a surface roughness having a maximum height Rmax of 0.1 $\mu$m to 100 $\mu$m.

7. An optical-purpose layered product according to claim 5 or 6, further comprising an electrode formed over the other surface of the base material than the surface with the porous silica.

8. An optical-purpose layered product according to any one of claims 5-7, wherein the product serves as a solar cell which comprises at least one pair of electrodes, which are interposed by a semiconductor layer and which has a light-receiving surface being coated with the porous silica.

9. A composition comprising:

   at least one kind selected from a tetraalkoxysilane group consisting of tetraalkoxysilanes, and hydrolysates and partial condensates of the tetraalkoxysilanes; and
   at least one kind selected from another alkoxysilane group consisting of alkoxysilanes other than the tetraalkoxysilanes, and and hydrolysates and partial condensates of the other alkoxysilanes; and/or
   a partial condensate of at least one kind selected from the tetraalkoxysilane group and at least one kind selected from the other alkoxysilane group,
   the composition further comprising
   water,
   an organic solvent,
   a catalyst, and
   a non-ionic polymer having an ethylene oxide moiety,
   the composition below meeting Conditions (3) through (6) where
   Condition (3) represents that the ratio of silicon atoms derived from tetraalkoxysilanes to the silicon atoms derived from the entire alkoxysilanes is 0.3 (mol/mol) to 0.7 (mol/mol),
   Condition (4) represents that the ratio of water to the silicon atoms derived from the entire alkoxysilanes is 10 (mol/mol) or higher,
   Condition (5) represents that the weight-average molecular weight of the non-ionic polymer having the ethylene oxide moiety is 4,300 or more, and
   Condition (6) represents that the organic solvent contains one or more organic solvents having boiling points of 55 to 140 °C at a ratio of 80 wt% or higher.

10. A composition according to claim 9, wherein the ratio of the non-ionic polymer having the ethylene oxide moiety to the silicon atoms derived from the entire alkoxysilanes is 0.001 (mol/mol) to 0.05 (mol/mol).

11. A composition according to claim 9 or 10, wherein the content of the ethylene oxide moiety in the non-ionic polymer is 20 wt% or higher.

12. A composition according to any one of claims 9-11, wherein
    the tetraalkoxysilanes are tetraethoxysilane; and

the other alkoxysilanes than the tetraalkoxysilanes are a monoalkyl alkoxysilane or dialkyl alkoxysilane which has an aromatic hydrocarbon group or an aliphatic hydrocarbon group.

13. A composition according to any one of claims 9-12, wherein the catalyst is an acid.

14. A method for producing porous silica as defined in claim 1, said method comprising:

  forming the composition defined in any one of claims 9-13 into a film deposited over a base material under an environment having a relative humidity of 20% to 85%; and
  heating the composition deposited.


**Patentansprüche**

1. Poröses Siliziumdioxid, welches Bedingung (1) und Bedingung (2) erfüllt, wobei
Bedingung (1) besagt, dass der Brechungsindex 1,3 oder weniger beträgt; und
Bedingung (2) besagt, dass die Differenz des Brechungsindex bei einer Wellenlänge von 550 nm zwischen vor dem Eintauchen in Wasser und nach dem Eintauchen in Wasser für die Dauer von 24 Stunden 0,15 oder weniger beträgt; und
wobei der statische Kontaktwinkel für Wasser nach Erhitzen bei 350 °C für eine Stunde 25°-90° beträgt.

2. Poröses Siliziumdioxid nach Anspruch 1, wobei das XRD-Pattern keinen Beugungspeak mit einer Intensität größer oder gleich der zweifachen Standardabweichung im Bereich mit dem Beugungswinkel (2θ)=0,5° bis 10° aufweist.

3. Poröses Siliziumdioxid nach Anspruch 1 oder 2, wobei die arithmetische Oberflächenrauigkeit Ra 20 nm oder weniger beträgt.

4. Poröses Siliziumdioxid nach einem der Ansprüche 1-3, wobei das Siliziumdioxid eine Schicht mit niedrigem Reflexionsvermögen ist.

5. Beschichtetes Produkt für optische Zwecke, umfassend:

  ein Basismaterial;
  das poröse Siliziumdioxid definiert in einem der Ansprüche 1-4, welches über dem Basismaterial ausgebildet ist.

6. Beschichtetes Produkt für optische Zwecke nach Anspruch 5, wobei das poröse Siliziumdioxid über dem Basismaterial ausgebildet ist, welches eine gemittelte Mittellinienrauigkeit von 0,1 $\mu$m bis 15 $\mu$m sowie eine Oberflächenrauigkeit mit einer Maximalhöhe Rmax von 0,1 $\mu$m bis 100 $\mu$m aufweist.

7. Beschichtetes Produkt für optische Zwecke nach Anspruch 5 oder 6, das zusätzlich eine Elektrode, welche über eine andere Oberfläche des Basismaterials als das poröse Siliziumdioxid ausgebildet ist, umfasst.

8. Beschichtetes Produkt für optische Zwecke nach einem der Ansprüche 5-7, wobei das Produkt als eine Solarzelle dient, welche mindestens ein Elektrodenpaar, zwischen dem eine Halbleiterschicht eingefügt ist und welches eine lichtempfangende Oberfläche aufweist, die mit dem porösen Siliziumdioxid beschichtet ist, umfasst.

9. Zusammensetzung umfassend:

  mindestens einen Bestandteil ausgewählt aus einer Tetraalkoxysilan-Gruppe, bestehend aus Tetraalkoxysilanen, und Hydrolysaten und Teilkondensaten der Tetraalkoxysilane; und
  mindestens einen Bestandteil aus einer anderen Alkoxysilan-Gruppe, bestehend aus anderen Alkoxysilanen, als den Tetraalkoxysilanen, und Hydrolysaten und Teilkondensaten dieser anderen Alkoxysilane; und/oder
  ein Teilkondensat mindestens eines Bestandteils ausgewählt aus der Tetraalkoxysilan-Gruppe und mindestens eines Bestandteils der anderen Alkoxysilan-Gruppe,
  wobei die Zusammensetzung zusätzlich umfasst:

  Wasser,
  ein organisches Lösungsmittel,

einen Katalysator, und

ein nicht-ionisches Polymer, welches eine Ethylenoxid-Einheit aufweist, wobei die Zusammensetzung die folgenden Bedingungen (3) bis (6) erfüllt, wobei

Bedingung (3) besagt, dass das Verhältnis der Siliziumatome, abgeleitet aus den Tetraalkoxysilanen, zu den Siliziumatomen, abgeleitet aus allen Alkoxysilanen, 0,3 (mol/mol) bis 0,7 (mol/mol) beträgt,

Bedingung (4) besagt, dass das Verhältnis von Wasser zu den Siliziumatomen, abgeleitet aus allen Alkoxysilanen, 10 (mol/mol) oder mehr beträgt,

Bedingung (5) besagt, dass das massengemittelte Molgewicht des nicht-ionischen Polymers, welches die Ethylenoxid-Einheit aufweist, 4.300 oder mehr beträgt,

Bedingung (6) besagt, dass das organische Lösungsmittel ein oder mehrere organische Lösungsmittel mit einem Siedepunkt von 55 bis 140 °C in einem Anteil von 80 Gew-% oder mehr enthält.

10. Zusammensetzung nach Anspruch 9, wobei das Verhältnis vom nicht-ionischem Polymer, welches die Ethylenoxid-Einheit aufweist, zu den Siliziumatomen, abgeleitet aus allen Alkoxysilanen, 0,001 (mol/mol) bis 0,05 (mol/mol) beträgt.

11. Zusammensetzung nach Anspruch 9 oder 10, wobei der Anteil der Ethlyenoxid-Einheit in dem nicht-ionischen Polymer 20 Gew.-% oder mehr beträgt.

12. Zusammensetzung nach einem der Ansprüche 9-11, wobei

die Tetraalkoxysilane Tetraethoxysilan sind; und

die anderen Alkoxysilane als den Tetraalkoxysilanen, Monoalkylalkoxysilan oder Dialkylalkoxysilan, welches eine aromatischen Kohlenwasserstoffgruppe oder eine aliphatische Kohlenwasserstoffgruppe besitzt, sind.

13. Zusammensetzung nach einem der Ansprüche 9-12, wobei der Katalysator eine Säure ist.

14. Verfahren zur Herstellung des porösen Siliziumdioxids definiert in Anspruch 1, wobei das Verfahren folgendes umfasst:

Formen einer Zusammensetzung definiert in einem der Ansprüche 9-13 in einen Film, welcher über ein Basismaterial in einer Umgebung mit einer relativen Luftfeuchte von 20% bis 85% abgeschieden wird; und

Erhitzen der abgeschiedenen Zusammensetzung.

**Revendications**

1. Silice poreuse qui répond à la Condition (1) et à la Condition (2), où la Condition (1) représente que l'indice de réfraction est 1,3 ou moins ; et

la Condition (2) représente que la différence de l'indice de réfraction à une longueur d'onde de 550 nm entre avant l'immersion dans de l'eau et après l'immersion dans de l'eau pendant 24 heures est de 0,15 ou moins ; et

dans laquelle l'angle de contact statique avec l'eau après un procédé de chauffage à 350°C pendant 1 heure est 25° à 90°.

2. Silice poreuse selon la revendication 1, dans laquelle le motif de diffraction des rayons X (XRD) n'a pas de pic de diffraction dont l'intensité est deux fois un écart type ou plus dans une région de l'angle de diffraction ($2\theta$) = 0,5° jusqu'à 10°.

3. Silice poreuse selon la revendication 1 ou 2, dans laquelle la rugosité de surface arithmétique Ra est de 20 nm ou moins.

4. Silice poreuse selon l'une quelconque des revendications 1 à 3, dans laquelle la silice poreuse est une couche à faible réflexion.

5. Produit stratifié pour utilisation optique, comprenant :

un matériau de base ;

une silice poreuse définie dans l'une quelconque des revendications 1 à 4 formée sur le matériau de base.

**6.** Produit stratifié pour utilisation optique selon la revendication 5, dans lequel la silice poreuse est formée sur le matériau de base qui a une rugosité moyenne de ligne centrale de 0,1 $\mu$m à 15 $\mu$m et une rugosité de surface ayant une hauteur maximale Rmax de 0,1 $\mu$m à 100 $\mu$m.

**7.** Produit stratifié pour utilisation optique selon la revendication 5 ou 6, comprenant en outre une électrode formée sur l'autre surface du matériau de base que la surface avec la silice poreuse.

**8.** Produit stratifié pour utilisation optique selon l'une quelconque des revendications 5 à 7, dans lequel le produit sert de cellule solaire qui comprend au moins une paire d'électrodes, entre lesquelles est interposée une couche semi-conductrice, et qui a une surface recevant la lumière revêtue de la silice poreuse.

**9.** Composition comprenant :

au moins un type sélectionné parmi un groupe tétraalkoxysilane constitué de tétraalkoxysilanes, et d'hydrolysats et de condensats partiels des tétraalkoxysilanes ; et
au moins un type sélectionné parmi un autre groupe alkoxysilane constitué d'alkoxysilanes autres que les tétraalkoxysilanes, et d'hydrolysats et de condensats partiels des autres alkoxysilanes ; et/ou
un condensat partiel d'au moins un type sélectionné parmi le groupe tétraalkoxysilane et au moins un type sélectionné parmi l'autre groupe alkoxysilane,
la composition comprenant en outre
de l'eau,
un solvant organique,
un catalyseur, et
un polymère non-ionique ayant un fragment d'oxyde d'éthylène,
la composition ci-dessous répondant aux Conditions (3) à (6) où
la Condition (3) représente que le rapport d'atomes de silicium dérivés des tétraalkoxysilanes sur les atomes de silicium dérivés de l'intégralité des alkoxysilanes est de 0,3 (mol/mol) à 0,7 (mol/mol),
la Condition (4) représente que le rapport de l'eau sur les atomes de silicium dérivés de l'intégralité des alkoxysilanes est de 10 (mol/mol) ou plus,
la Condition (5) représente que le poids moléculaire moyen en poids du polymère non-ionique ayant le fragment d'oxyde d'éthylène est 4 300 ou plus, et
la Condition (6) représente que le solvant organique contient un ou plusieurs solvants organiques ayant des points d'ébullition de 55 à 140°C à un rapport de 80 % en poids ou plus.

**10.** Composition selon la revendication 9, dans laquelle le rapport du polymère non-ionique ayant le fragment d'oxyde d'éthylène sur les atomes de silicium dérivés de l'intégralité des alkoxysilanes est de 0,001 (mol/mol) à 0,05 (mol/mol).

**11.** Composition selon la revendication 9 ou 10, dans laquelle la teneur du fragment d'oxyde d'éthylène dans le polymère non-ionique est de 20 % en poids ou plus.

**12.** Composition selon l'une quelconque des revendications 9 à 11, dans laquelle les tétraalkoxysilanes sont du tétraéthoxysilane ; et
les autres alkoxysilanes que les tétraalkoxysilanes sont un alkoxysilane monoalkyle ou un alkoxysilane dialkyle qui a un groupe hydrocarboné aromatique ou un groupe hydrocarboné aliphatique.

**13.** Composition selon l'une quelconque des revendications 9 à 12, dans laquelle le catalyseur est un acide.

**14.** Procédé de production de silice poreuse telle que définie dans la revendication 1, ledit procédé comprenant les étapes consistant à :

former la composition définie dans l'une quelconque des revendications 9 à 13 en un film déposé sur le matériau de base dans un environnement ayant une humidité relative de 20 % à 85 % ; et
chauffer la composition déposée.

FIG. 1

**EP 2 130 797 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001202827 A
- JP 2001226171 A
- JP 2003064307 A
- JP 2003142476 A
- JP 2004143029 A
- JP 2005503664 A